# EUROPEAN PATENT SPECIFICATION

(11) **EP 1 681 096 B1**
(45) Date of publication and mention of the grant of the patent: **21.11.2012**
(21) Application number: 04792725.6
(22) Date of filing: 14.10.2004
(51) Int. Cl.: B01J 23/58, B01J 23/62, B01D 53/94, F01N 3/10

(54) **CATALYST FOR EXHAUST GAS CLEANING**
KATALYSATOR FÜR DIE ABGASREINIGUNG
CATALYSEUR DE PURIFICATION DES GAZ D'ECHAPPEMENT

(30) Priority: 24.10.2003 JP 2003364852
(43) Date of publication of application: 19.07.2006
(73) Proprietor: Toyota Jidosha Kabushiki Kaisha, Toyota-shi, Aichi 471-8571 (JP)
(72) Inventor: TAKESHIMA, Shinichi, Toyota-shi, Aichi 4718571 (JP); YAMASHITA, Tetsuya, Toyota-shi, Aichi 4718571 (JP); TANAKA, Toshiaki, Toyota-shi, Aichi 4718571 (JP)
(74) Representative: TBK
(86) International application number: PCT/JP2004/015575
(87) International publication number: WO 2005/039759

(56) References cited:
- EP-A1- 0 955 267
- EP-A1- 1 321 186
- EP-A1- 1 364 699
- EP-A1- 1 452 483
- EP-A1- 1 479 651
- EP-A2- 1 020 223
- WO-A1-02/094716
- JP-A- 2 175 602
- JP-A- 2 175 602
- JP-A- 6 178 937
- JP-A- 8 099 034
- JP-A- 8 281 106
- JP-A- 9 024 274
- JP-A- 2001 170 487
- JP-A- 2002 079 097
- JP-A- 2004 262 702
- "Producing metal oxide composite ultrafine particles - by hydrolysing metal alkoxide in water-in-oil microemulsion contg. surfactant, water and non-polar organic liq" DATABASE WPI, 1990, XP002971759
- YENTEKAKIS I.V. ET AL.: 'Promotion by sodium in emission control catalysis: a kinetic and spectroscopic study of the Pd-catalyzed reduction of NO by propene' JOURNAL OF CATALYSIS vol. 176, 15 May 1998, pages 82 - 92, XP004447397

## Description

### Technical Field

The present invention relates to an exhaust gas purifying catalyst for purifying the exhaust gases emitted from an internal combustion engine of an automobile, or the like.

### Background Art

Exhaust gases emitted from internal combustion engines such as automotive engines usually contain such substances (emissions) as hydrocarbon compounds (hereinafter referred to as "HCs"), carbon monoxide (CO), nitrogen oxides (NOx) and the like. To decrease the amounts of emission of these substances, there has generally been employed a method of removing these substances contained in the exhaust gases by using an exhaust gas-purifying catalyst in addition to optimizing the combustion conditions, such as the air-fuel ratio, of the engine.

As the catalyst for purifying the exhaust gases, there has been known a so-called three-way catalyst obtained when noble metals such as platinum (Pt), rhodium (Rh) and palladium (Pd) are carried on a porous metal oxide substrate such as alumina. It has been known that the three-way catalyst is capable of oxidizing CO and HCs and of reducing NOx into N₂.

From the standpoint of protecting the global environment, on the other hand, it has become an issue to suppress the amount of carbon dioxide (CO₂) emitted from internal combustion engines such as automotive engines. In an attempt to cope with this issue, there has been developed a so-called lean-burn engine which conducts lean burning in an excess-oxygen (lean) atmosphere. The lean-burn engine uses fuel in a decreased amount and, hence, suppresses the production of CO₂ which is a combustion exhaust gas.

The conventional three-way catalyst works to simultaneously oxidize and reduce HCs, CO and NOx in the exhaust gas when the air-fuel ratio is a stoichiometric air-fuel ratio, and is capable of removing HCs and CO by oxidation in an excess-oxygen atmosphere of the exhaust gas of during the lean burn as described above but is not capable of exhibiting sufficient purifying performance for removing NOx by reduction.

Therefore, there has been developed a system which, usually, executes the combustion under an excess-oxygen lean condition and purifies NOx by reduction by creating a reducing atmosphere in the exhaust gas by temporarily establishing a stoichiometric to rich condition. There has also been developed an exhaust gas purifying catalyst of the NOx occluding and reducing type by using a NOx occluding material which occludes NOx in a lean atmosphere and releases the NOx occluded in the stoichiometric to rich atmosphere.

The exhaust gas purifying catalyst of the NOx occluding and reducing type is constituted by forming a layer of a NOx occluding material comprising alkali metals, alkaline earth metals or rare earth elements on a substrate of a porous metal oxide such as alumina, and further carrying a noble metal catalyst such as platinum or the like on the surface of the substrate. When the air-fuel ratio of the exhaust gas is lean, NOx contained in the exhaust gas is oxidized by the noble metal catalyst and is occluded in the form of nitrates by the NOx occluding material of the catalyst. Next, when the air-fuel ratio of the exhaust gas is enriched within a short period of time, NOx that had been occluded in the NOx occluding material during the last period is released and is purified upon reacting with reducing components such as HCs and CO. Thereafter, as the air-fuel ratio of the exhaust gas returns to lean, NOx starts to be occluded by the NOx occluding material making it possible to efficiently purify NOx even in the exhaust gas emitted from the lean-burn engine.

However, the exhaust gas purifying catalyst of the NOx occluding and reducing type has a problem in that its NOx purifying capability drops considerably when the exhaust gas has a temperature of as high as 500°C or higher. Therefore, there has been proposed an exhaust gas purifying catalyst comprising a perovskite composite oxide having a high NOx purifying capability even in a high-temperature region (e.g., see JP-A-2002-143684).

In this exhaust gas purifying catalyst, the perovskite composite oxide promotes the action for directly decomposing NOx and, hence, exhibits a high NOx purifying performance over a temperature range wider than that of the prior art, but the NOx occluding capability drops if the temperature exceeds 700°C and NOx cannot be held at higher temperatures. Besides, an NOx purifying efficiency is not exhibited to a sufficient degree under practical conditions.

It is therefore an object of the present invention to provide an exhaust gas purifying catalyst capable of achieving purification of NOx up to a temperature of as high as 1000°C by using, as a catalyst substrate, a zirconium composite oxide having a particular element in the crystal structure.

EP 1452483 (A1) discloses a process for production of compound oxides having homogeneously diffused and mixed elements. The process for production of compound oxides, comprising contacting an organic phase having dissolved therein an organic compound which produces the hydroxide of a first element when hydrolyzed, with an aqueous phase containing a second element as an ion, to produce the hydroxide of the first element by hydrolysis reaction of the organic compound at the interface while incorporating the second element in the product, and firing the resulting product to produce a compound oxide of the first element and second element. Third or additional elements may be included in the aqueous phase to produce compound oxides comprising third or additional elements.

EP 1479651 (A1) discloses a porous composite oxide comprising an aggregate of secondary particles in the form of aggregates of primary particles of a composite oxide containing two or more types of metal elements, and having mesopores having a pore diameter of 2-100 nm between the secondary particles; wherein, the percentage of the mesopores between the secondary particles having a diameter of 10 nm or more is 10% or more of the total mesopore volume after firing for 5 hours at 600°C in an oxygen atmosphere.

JP 2175602 (A) discloses a ultrafine-particle metal oxide composition that is produced by hydrolysis reaction of a metal alkoxide in surfactant-water-nonpolar organic liquid based W/O type, the reaction is carried out as follows: An aqueous solution of salt of one or more kinds of metal different from a metal contained in a metal alkoxide are solubilized in W/O type microemulsion and the metal alkoxide is added thereto and hydrolyzed to provide the aimed composition. The ultrafine-particle zirconium oxide composition obtained by the above- mentioned method is a composition containing oxide of at least one metal selected from Ca, Mg, Y and lanthanoid based element in particle unit and uniformly dispersed state and having ≤ 1000 Angstrom particle diameter.

WO 02094716 (A1) discloses the preparation of sintering resistant hexaaluminates, AAl₁₁O₁₈, wherein A is an alka-line earth or rare earth metal, and more particularly lanthanum, by a combination of sol-gel and microemulsion techniques using a water soluble salt of A, and a method of forming spherical pellets thereof.

EP 0955267 (A1) discloses a zirconium-cerium composite oxide having excellent heat resistance and being capable of maintaining its large specific surface area even when used under high-temperature conditions, which composite oxide contains zirconium and cerium at a weight ratio of 51 to 95 : 49 to 5 in terms of zirconium oxide and ceric oxide, the composite oxide having a specific surface area of not smaller than 50 m²/g, wherein said composite oxide is capable of maintaining a specific surface area of not smaller than 20 m²/g even after heating at 1100°C for 6 hours, a method for preparing the same, and a co-catalyst for purifying exhaust gas prepared with the composite oxide.

### Disclosure of the Invention

In order to solve the above problem, a first embodiment of the present invention deals with an exhaust gas purifying catalyst carrying an alkali metal and a noble metal on a crystalline zirconium composite oxide having a ZrO₂ lattice wherein the zirconium composite oxide is the one in which zirconium is partly substituted with at least one kind of element selected from trivalent rare earth metals, wherein said element is nearly completely substituted for the ZrO₂ lattice so that the elongation of the ZrO₂ lattice due to the substitution with the element assumes a nearly theoretical value.

A second embodiment is concerned with the first embodiment wherein at least one kind of element selected from the trivalent rare earth metals in an amount of 5 to 50 mole % based on the whole mole number of all the metal elements in the zirconium composite oxide.

A third embodiment is concerned with the first embodiment wherein zirconium is partly substituted with lanthanum.

A fourth embodiment is concerned with the first embodiment wherein the alkali metal carried by the zirconium composite oxide is cesium.

A fifth embodiment is concerned with the first embodiment wherein the noble metal carried by the zirconium composite oxide is platinum.

Further beneficial embodiments are set forth in the further dependent claims.

### Brief Description of the Drawings

Fig. 1 is a diagram illustrating of ultra-strong basic points in the catalyst of the present invention, wherein Fig. 1(A) illustrates the crystalline structure of a zirconium oxide, Fig. 1(B) illustrates the crystalline structure of the zirconium oxide of when zirconium is partly substituted with lanthanum, and Fig. 1(C) illustrates the crystalline structure of a zirconium composite oxide of the present invention;
Fig. 2 is a diagram illustrating the steps of producing the catalyst of the present invention;
Fig. 3 is a view of a spark-ignition internal combustion engine;
Fig. 4 is a diagram illustrating the manner of adsorption and dissociation of nitrogen monoxide, wherein Figs. 4(A) and 4(B) illustrate states where nitrogen monoxide is adsorbed by a carrier having an ultra-strong basic point, Fig. 4(C) illustrates a state where nitrogen is dissociated, and Fig. 4(D) illustrates a state where oxygen is released;
Fig. 5 is a diagram illustrating a relationship between the amount of energy to be imparted and the temperature of the exhaust gas purifying catalyst;
Fig. 6 is a diagram illustrating a map of the amounts of nitrogen monoxide in the exhaust gas;
Fig. 7 is a diagram illustrating the amounts of energy to be imparted;
Fig. 8 is a flowchart for controlling the energy that is imparted;
Fig. 9 is a diagram for controlling the air-fuel ratio;
Fig. 10 is a time chart illustrating changes in the oxygen concentration and in the NOx concentration;
Fig. 11 is a diagram illustrating a relationship between the amount of a reducing agent to be fed and the temperature of the exhaust gas purifying catalyst;
Fig. 12 is a diagram for controlling the air-fuel ratio;
Fig. 13 is a flowchart for controlling the feeding of the reducing agent;
Fig. 14 is a flowchart for reducing nitric acid ions and nitrogen monoxide;
Fig. 15 is a diagram illustrating an elapsed time;
Fig. 16 is a flowchart for controlling the feeding of the reducing agent;
Fig. 17 is a whole view illustrating another embodiment of the spark-ignition internal combustion engine;
Fig. 18 is a flowchart for controlling the feeding of the reducing agent;
Fig. 19 is a whole view illustrating a further embodiment of the spark-ignition internal combustion engine;
Fig. 20 is a view illustrating a still further embodiment of the spark-ignition internal combustion engine;
Fig. 21 is a view illustrating a compression ignition internal combustion engine;
Fig. 22 is a view of a particulate filter, wherein Fig. 22(A) is a front view and Fig. 22(B) is a side sectional view;
Fig. 23 is a diagram illustrating the amount of production of smoke;
Fig. 24(A) is a graph illustrating a relationship between an average gas temperature in the combustion chamber and the crank angle, and Fig. 24(B) is a graph illustrating a relationship between the temperature of the fuel and surrounding gas and the crank angle;
Fig. 25 is a diagram illustrating operation regions I and II;
Fig. 26 is a diagram illustrating the air-fuel ratios;
Fig. 27 is a diagram illustrating changes in the throttle valve opening degree and the like;
Fig. 28 is a graph illustrating lattice spacings of lanthanum zirconia; and
Fig. 29 is a graph illustrating high-temperature NOx occlusion performance of catalysts.

### Best Mode for Carrying Out the Invention

An exhaust gas purifying catalyst of the present invention is one carrying an alkali metal and a noble metal on a substrate of a crystalline zirconium composite oxide according to claim 1. As the alkali metal, there can be used lithium, sodium, potassium, rubidium, cesium or francium. As the noble metal, there can be used platinum, palladium or rhodium. It is desired that the alkali metal is carried in an amount of 0.05 to 0.3 moles/L and the noble metal is carried in an amount of 1 to 5 g/L.

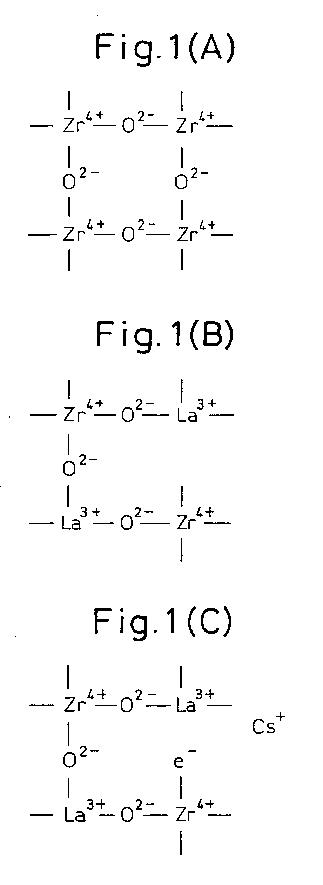

As shown in Fig. 1(A), the substrate in the exhaust gas purifying catalyst of the present invention basically has the crystalline structure of zirconium oxide, and is a zirconium composite oxide in which zirconium in the crystalline structure is partly substituted by at least one element selected from trivalent rare earth metals As the trivalent rare earth metals, there can be used scandium, yttrium, lanthanum, neodymium, promethium, samarium, europium, gadolinium, dysprosium, holmium, erbium, thulium, ytterbium or lutetium. At least one element selected from trivalent rare earth metals is contained in an amount of 5 to 50 mole % based on the whole mole number of all the metal elements in the zirconium composite oxide.

The zirconium constituting the crystalline zirconium oxide is tetravalent. If this is substituted with a trivalent rare earth metal, such as lanthanum, an oxygen defect is formed in the crystal lattice without oxygen as shown in, for example, Fig. 1(B).

The composite oxide further carries an alkali metal such as cesium as described above, and an electron e⁻ is donated to the oxygen defect due to cesium as shown in Fig. 1(C). The oxygen defect donated with the electron exhibits a very strong basic property. Therefore, the oxygen defect donated with the electron is hereinafter referred to as an ultra-strong basic point.

In the exhaust gas purifying catalyst of the present invention, all the zirconium composite oxide which is the substrate has a crystalline structure as shown in Fig. 1(C) and, further, has numerous ultra-strong basic points that are homogeneously distributed. Here, the conventional catalyst, that uses a substrate in which zirconium in the zirconium oxide is partly substituted with lanthanum or the like, has been produced by a conventional method of producing composite oxides, such as co-precipitation method or alkoxide method, and is not capable of permitting lanthanum to be substituted with zirconium to a sufficient degree, does not have ultra-strong basic points in a sufficient amount and is not, further, capable of homogeneously distributing the ultra-strong basic points. On the other hand, the substrate in the catalyst of the present invention enables lanthanum to be substituted in a sufficiently large amount by zirconium relying upon a predetermined method, and enables the ultra-strong basic points to be homogeneously distributed in a sufficient amount. Substitution by lanthanum in a sufficient amount is reflected by the fact that the elongation of the crystal lattice of the zirconium oxide due to the substitution with an element assumes a nearly theoretical value.

The zirconium composite oxide can be produced by a method according to claim 6, which is described below, the zirconium composite oxide being one in which zirconium is partly substituted by at least one element selected from trivalent rare earth metals , and the elongation of the crystal lattice due to the substitution with an element assumes a nearly theoretical value.

That is, an organic phase dissolving an organic compound that forms a hydroxide of zirconium upon the hydrolysis is contacted with an aqueous phase which contains as, ions, a second element selected from trivalent rare earth metals, the second element is taken into a formed product in the step of forming the hydroxide of zirconium by the hydrolysis of the zirconium organic compound on the interface thereof, and the obtained composite hydroxide (precursor) is fired to obtain a composite oxide of zirconium and the second element.

There have been known organic compounds that form a hydroxide of zirconium upon the hydrolysis, and the present invention can use any one of them. For example, there can be exemplified a zirconium alkoxide and an acetylacetone zirconium complex.

There has also been known the hydrolysis of zirconium Zr(OR)₄ which formally is expressed as Zr(OR)₄ + 4H₂O → Zr(OH)₄ + 4ROH and, then, as Zr(OH)₄ → ZrO₂ + 2H₂O.

There has also been known the hydrolysis of the acetylacetone complex (CH₃COCH₂COCH₃)₄Zr which can be expressed as (CH₃COCH₂COCH₃)₄Zr + 4ROH → 4CH₃COCH₂C(OH)CH₃ + Zr(OH)₄ and, then, as Zr(OH)₄ → ZrO₂ + 2H₂O.

The organometal compound such as zirconium alkoxide or acetylacetone zirconium complex can be relatively from easily dissolved if a suitable solvent is selected of a polar organic solvent and a nonpolar organic solvent. Examples of the organic solvent include hydrocarbons such as cyclohexne and benzene, straight chain alcohols such as hexanol and the like, and ketones such as acetone and the like. The organic solvent is selected on the basis of the width of the region (large molar ratio of water/surfactant) for forming micro-emulsion in addition to the solubility of the surfactant.

It has been known that if water is added to an organic phase in which there has been dissolved an organometal compound that forms a hydroxide upon the hydrolysis, the hydrolysis of the organometal compound starts and proceeds. A metal hydroxide can generally be obtained by adding water to the organic phase in which the organic metal compound is dissolved, followed by stirring.

Formation of a fine metal hydroxide or oxide also occurs by forming a water-in-oil type emulsion or micro-emulsion by finely dispersing an aqueous phase in an organic phase (oil phase) by using a surfactant, and adding an organometal compound (solution obtained by dissolving the organometal compound in an organic solvent) into the organic phase (oil phase), followed by stirring. Though this is not to impose any limitation, it is considered that fine particles of a product are obtained, as numerous micellar surfaces of the aqueous phase surrounded by the surfactant become reaction nuclei or since fine particles of the hydroxide formed by the surfactant are stabilized.

Upon dissolving a plurality of hydrolyzable organometal compounds in an organic phase in the hydrolysis, it has also been known that a plurality of metal hydroxides are simultaneously formed due to the hydrolysis of the plurality of organometal compounds when contacted with the water.

In the present invention, a feature resides in that any one compound (containing zirconium) out of the hydrolyzable organometal compounds is made present in the organic phase, a second metal element selected, from trivalent rare earth metals, besides, third and further metal elements are made present, as ions, in the aqueous phase which is not the traditionally employed organic phase at the time of bringing the organic phase into contact with the aqueous phase.

To make the metals present as ions in the aqueous phase, there can be used a water-soluble metal salt and, particularly, an inorganic acid salt such as nitrate or chloride, or organic acid salt such as acetate, lactate or oxalate. Ions of the second element present in the aqueous solution may be simple ions of a metal as well as complex ions including the second element. The same holds even for the ions of the third and further elements.

When the organic phase is brought into contact with the aqueous phase, the organic zirconium compound in the organic phase comes in contact with the water, whereby the hydrolysis takes place to form a hydroxide or oxide of zirconium. Here, according to the present invention, it was discovered that ions of a metal present in the aqueous phase are taken into the hydroxide (or oxide) of zirconium which is the hydrolyzed product. This phenomenon had not been known before. The reason is not yet known why the ions in the aqueous phase are taken into the hydroxide without any particular precipitation method. Considering the case of the organozirconium compound which is an alkoxide, however, it is considered that ions of the second metal in the aqueous phase induces the alkoxide when the alkoxide is hydrolyzed to accelerate the hydrolysis, or the hydrolyzed fine hydroxide of the alkoxide traps a predetermined amount of metal ions in the aqueous phase and is aggregated.

According to the present invention, ions of the second metal element present in the aqueous phase are taken into the hydroxide obtained by the hydrolysis of the organozirconium compound of zirconium in the organic phase in the novel production method making it possible to obtain a hydroxide in which there are very homogeneously dispersed zirconium and a second metal element in the obtained hydroxide. It was discovered that the homogeneity is very superior to that of the conventional alkoxide method, i.e., as compared to when a plurality of metal oxides are made present in the organic phase. Even at a relatively low firing temperature, there are also obtained zirconium of a composite oxide after firing and a composite oxide (solid solution) in which the second metal element is ideally mixed on an atomic level. This was not accomplished by the conventional metal alkoxide method. In the conventional metal alkoxide method, the stability differs depending upon the kind of the metal alkoxide, and there is obtained only a non-homogeneous product between the first metal element and the second metal element.

The ratio of zirconium and the second metal element in the composite oxide used in the invention can be adjusted by relying upon the ratio of the amount of zirconium in the organic phase and the amount of the second metal element in the aqueous phase.

In the present invention, it is desired that the reaction system is either the water-in-oil emulsion system or the micro-emulsion system. In this case, first, the diameter of the micro-emulsion is as small as several nm to ten and several nm and the oil phase - aqueous phase interface is very wide (about 8000 m²/liter when the diameter is 10 nm) enabling the hydrolysis to be carried out at a high speed and, second, the aqueous phase is divided into shells such that each shell contains only a very small amount of metal ions (about 100 metal ions), promoting the homogenization.

In this sense, it is desired that the aqueous phase of micro-emulsion has a diameter of 2 to 40 nm, preferably, 2 to 15 nm and, more preferably, 2 to 10 nm.

A method is known for forming a water-in-oil emulsion system or a micro-emulsion system. As the organic phase medium, there can be used those same as the above-mentioned organic solvents, such as hydrocarbons like cyclohexane or benzene, straight-chain alcohols such as hexanol or the like, or ketones such as acetone or the like. A variety kinds of surfactants can be used in the invention, such as nonionic surfactants, anionic surfactants or cationic surfactants, and can be used in combination with the organic phase (oil phase) component depending upon the use.

As the non-ionic surfactant, there can be used those of the type of polyoxyethylenenonylphenyl ether as represented by polyoxyethylene(n = 5)nonylphenyl ether, polyoxyethyleneoctylphenyl ether as represented by polyoxyethylene(n = 10)octylphenyl ether, and polyoxyethylenealkyl ether as represented by polyoxyethylene (n = 7)cetyl ether.

As the anionic surfactant, there can be used sodium di-2-ethylenehexylsulfosuccinate. As the cationic surfactant, there can be used cetyltrimethylammonium chloride or cetyltrimethylammonium bromide.

Though it is desired to use the water-in-oil emulsion system or the micro-emulsion system, it is also allowable to conduct the reaction in the oil-in-water emulsion system.

When a composite oxide of three or more elements is to be produced according to the present invention, the third and further elements are made present in the aqueous phase. If a plurality of hydrolizable organometal compounds are made present in the organic phase, there is obtained an unhomogeneous product since stability is not the same among the hydrolyzable organometal compounds in the organic phase. Homogeneity is necessary between zirconium and the second metal element. However, if homogeneity is not important between zirconium and the third metal element, the organometal compound of the third element may be made present in the organic phase.

As described above, if the hydrolysis is conducted by bringing the organic phase into contact with the aqueous phase, there is generally formed a hydroxide (precursor). According to the present invention, in any way, the product is dried and fired to produce a composite oxide. The product may be separated and dried in a customary manner.

The firing conditions may be in a customary manner, and the firing temperature and the firing atmosphere may be selected depending upon the kind of the particular composite oxide. Generally, however, the firing may be conducted at a temperature lower than that of the prior art. This is attributed to, as the metal element has been homogeneously dispersed, a decreased amount of energy being necessary for diffusing the metal element in the solid.

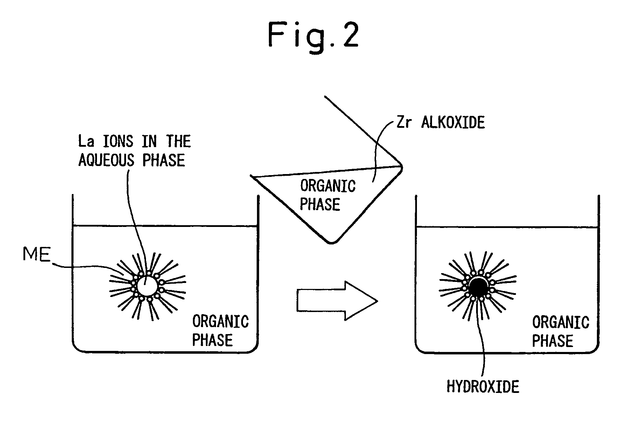

Fig. 2 schematically illustrates a method of producing the zirconium composite oxide with reference to a case of using the micro-emulsion of lanthanum zirconia. Referring to Fig. 2, lanthanum nitrate or the like is dissolved in an aqueous phase of the micro-emulsion ME, and to which is added zirconium alkoxide to synthesize lanthanum zirconia. That is, only one kind of metal alkoxide, i.e., zirconium alkoxide is added to the organic phase of the micro-emulsion. When a plurality of metal alkoxides are present in the organic phase, there is a difference in the stability among them making it difficult to obtain a homogeneously hydrolyzed product when the organic phase is contacted with the water. This method, however, removes the above inconvenience. When a composite oxide of three or more kinds of metal elements is to be synthesized, therefore, the third and further elements are added to the aqueous phase.

There has been known a hydrolysis of the hydrolyzable organometal compound. According to the present invention, it was discovered that if, the second element is present as ions in the aqueous phase at the time of hydrolyzing the hydrolyzable organozirconium compound in the organic phase by the contact with the aqueous phase, the second element is taken into the hydroxide which is the hydrolyzed product. In this reaction, ions of the second element in the aqueous phase are electrically attracted by the hydrophilic groups of the surfactant and are, at the same time, taken in when the organozirconium compound is hydrolyzed, forming a composite oxide containing the second element. It was further discovered that the reaction causes zirconium contained in the organozirconium compound and the second element in the aqueous phase to be homogeneously dispersed and mixed in the hydrolyzed product and, further, in the composite oxide.

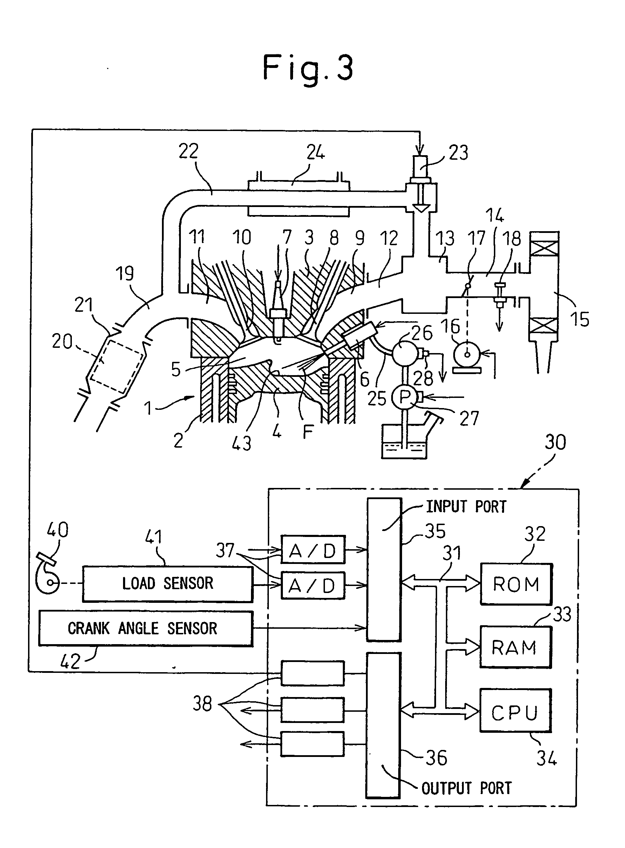

The thus obtained zirconium composite oxide is used as a substrate, and an alkali metal and a noble metal are carried by the substrate in the same manner as the conventional method to obtain an exhaust gas purifying catalyst of the present invention. Described below is the action for purifying NOx by using the thus obtained exhaust gas purifying catalyst of the present invention when the combustion is being conducted at a lean air-fuel ratio. Fig. 3 illustrates a case where the exhaust gas purifying catalyst of the present invention is applied to a spark-ignition internal combustion engine. The present invention can also be applied to a compression ignition internal combustion engine.

In Fig. 3, reference numeral 1 denotes an engine body, 2 denotes a cylinder block, 3 denotes a cylinder head, 4 denotes a piston, 5 denotes a combustion chamber, 6 denotes an electrically controlled fuel injector, 7 denotes a spark plug, 8 denotes an intake valve, 9 denotes an intake port, 10 denotes an exhaust valve, and 11 denotes an exhaust port. The intake port 9 is coupled to a surge tank 13 through a corresponding intake branch pipe 12, and the surge tank 13 is coupled to an air cleaner 15 through an intake duct 14. A throttle valve 17 driven by a step motor 16 is arranged in the intake duct 14, and an intake air amount sensor 18 is arranged in the intake duct 14 to detect the mass flow rate of the intake air. On the other hand, the exhaust port 11 is coupled to a catalytic converter 21 which incorporates an exhaust gas purifying catalyst 20 of the present invention through an exhaust manifold 19.

The exhaust manifold 19 and the surge tank 13 are coupled together through an exhaust gas recirculation (hereinafter referred to as EGR) passage 22, and an electrically controlled EGR control valve 23 is arranged in the EGR passage 22. The EGR passage 22 is surrounded by a cooling device 24 for cooling the EGR gas that flows through the EGR passage 22. In the embodiment shown in Fig. 3, the engine cooling water is guided into the cooling device 24 through which the EGR gas is cooled by the engine cooling water. On the other hand, the fuel injectors 6 are coupled to a fuel reservoir or a so-called common rail 26 through fuel feed pipes 25. A fuel is fed into the common rail 26 from an electrically controlled fuel pump 27 capable of varying the amount of ejection. The fuel fed into the common rail 26 is further fed into the fuel injectors 6 through the fuel feed pipes 25. The common rail 26 is provided with a fuel pressure sensor 28 for detecting the fuel pressure in the common rail 26. The amount of ejection of the fuel pump 27 is controlled based on an output signal from the fuel pressure sensor 28, so that the fuel pressure in the common rail 26 becomes a target fuel pressure.

An electronic control unit 30 comprises a digital computer which includes a ROM (read-only memory) 32, a RAM (random access memory) 33, a CPU (microprocessor) 34, an input port 35 and an output port 36 which are connected to each other through a bidirectional bus 31. Output signals of the intake air amount sensor 18 and of the fuel pressure sensor 28 are input to the input port 35 through the corresponding AD converters 37. A load sensor 41 is connected to an accelerator pedal 40 to generate an output voltage proportional to the amount L the accelerator pedal 40 is depressed, and an output voltage of the load sensor 41 is input to the input port 35 through the corresponding AD converter 37. Further, a crank angle sensor 42 is connected to the input port 35 to generate an output pulse for every rotation of the crankshaft by, for example, 30°. The output port 36, on the other hand, is connected to the fuel injectors 6, to the spark plugs 7, to a step motor 16 for driving the throttle valve, to an EGR control valve 23 and to the fuel pump 27 through the corresponding drive circuits 38.

A cavity 43 is formed in the top surface of the piston 4. When the engine is operating with a low load, the fuel F is injected from the fuel injector 6 toward the cavity 43. The fuel F is guided by the bottom wall surface of the cavity 43 toward the spark plug 7 thereby to form a mixture around the spark plug 7. Then, the mixture is ignited by the spark plug 7 to execute the stratified charge combustion. Here, the average air-fuel ratio in the combustion chamber 5 is lean and, hence, the air-fuel ratio of the exhaust gas is lean, too.

When the engine is operating with an intermediate load, the fuel is injected by being divided into two periods, i.e., the initial period of the intake stroke and the last period of the compression stroke. The fuel injected in the initial period of the intake stroke forms a lean mixture in the combustion chamber 5 entirely spreading in the combustion chamber 5, and the fuel injected in the last period of the compression stroke forms a mixture that becomes a live charcoal to make a fire around the spark plug 7. In this case, too, the average air-fuel ratio in the combustion chamber 5 is lean and, hence, the air-fuel ratio of the exhaust gas is lean, too.

When the engine is operating with a large load, on the other hand, the fuel is injected in the initial period of the intake stroke to form a uniform mixture in the combustion chamber 5. In this case, the air-fuel ratio in the combustion chamber 5 is any one of a lean ratio, a stoichiometric air-fuel ratio or a rich ratio. Usually, the engine operates with a small load or with an intermediate load and, hence, the combustion usually is conducted at a lean air-fuel ratio.

NOx emitted from the combustion chamber 5 while the combustion is being conducted at a lean air-fuel ratio is purified by the exhaust gas purifying catalyst 20. Though the mechanism of the action for purifying NOx of the exhaust gas purifying catalyst 20 has not been clarified yet, the results of the past analysis and the mechanism described below suggest an action for purifying NOx.

Namely, when the combustion is being conducted at a lean air-fuel ratio, the exhaust gas contains nitrogen oxides NOx such as nitrogen monoxide NO and nitrogen dioxide NO₂ as well as excess of oxygen O₂. In this case, most of the nitrogen oxides NOx contained in the exhaust gas is nitrogen monoxide NO. Therefore, a mechanism for purifying the nitrogen monoxide NO will now be described representatively.

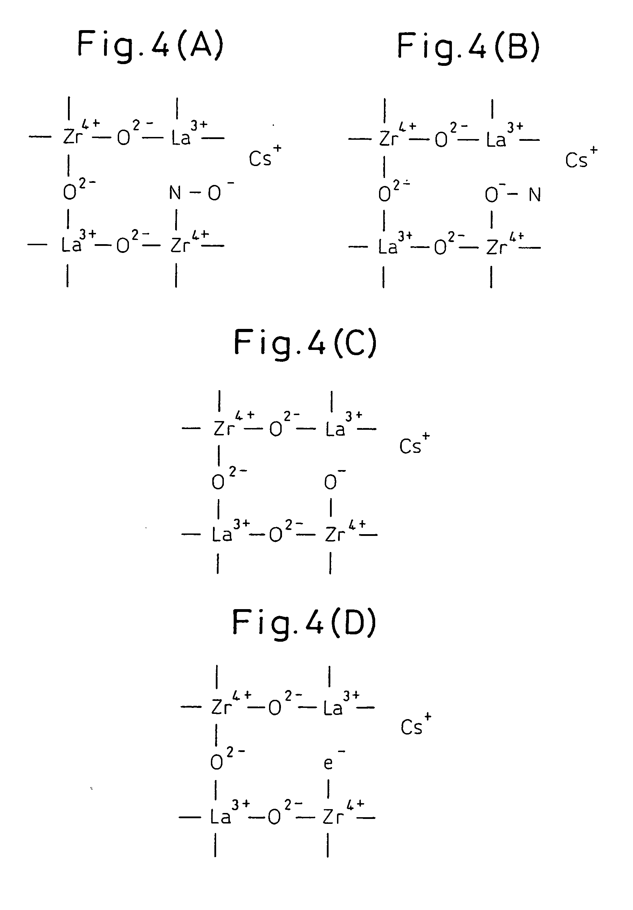

As described earlier, the exhaust gas purifying catalyst 20 of the present invention has ultra-strong basic points. When there exist such ultra-strong basic points, the nitrogen monoxide NO which is acidic is attracted by the ultra-strong basic points irrespective of whether the temperature of the exhaust gas purifying catalyst 20 is low or high. As a result, the nitrogen monoxide NO is trapped by the ultra-strong basic points of the exhaust gas purifying catalyst 20 in a form shown in either Fig. 4(A) or 4(B). In this case, as described earlier, the substrate of the exhaust gas purifying catalyst 20 have numerous ultra-strong basic points uniformly distributed over the whole surfaces thereof. Therefore, the exhaust gas purifying catalyst 20 adsorbs the nitrogen monoxide NO in very large amounts.

When adsorbed by the ultra-strong basic points, the nitrogen monoxide NO undergoes the dissociation action and the oxidation reaction. The action for dissociating the nitrogen monoxide NO will be described first.

As described above, the nitrogen monoxide NO in the exhaust gas is attracted by the ultra-strong basic points on the exhaust gas purifying catalyst, and is adsorbed and trapped by the ultra-strong basic points. Here, an electron e⁻ is donated to the nitrogen monoxide NO. Upon receiving the electron e⁻, the bond N-O of the nitrogen monoxide NO undergoes the dissociation. Here, the bond N-O tends to be dissociated with an increase in the temperature of the exhaust gas purifying catalyst 20. In fact, as the nitrogen monoxide NO is adsorbed by the ultra-strong basic points, the N-O bond is dissociated after a while into nitrogen N and oxygen O. Here, as shown in Fig. 4(C), oxygen remains being held at the ultra-strong basic points in the form of oxygen ions O⁻, and nitrogen N separates away from the ultra-strong basic point and migrates on the exhaust gas purifying catalyst 20.

Nitrogen N migrating on the exhaust gas purifying catalyst 20 is bonded to nitrogen N of the nitrogen monoxide NO adsorbed by other ultra-strong basic points of the exhaust gas purifying catalyst 20 or is bonded to other nitrogen N migrating on the exhaust gas purifying catalyst 20 to form a nitrogen molecule N₂ which is, then, released from the exhaust gas purifying catalyst 20. NOx is thus purified.

Here, the nitrogen monoxide NO adsorbed by the ultra-strong basic points starts dissociating after a while, and oxygen O is trapped on the ultra-strong basic points in the form of oxygen ions O⁻. Therefore, the ultra-strong basic points present on the exhaust gas purifying catalyst 20 are gradually filled with oxygen ions O⁻. As the ultra-strong basic points are filled with oxygen ions O⁻ as described above, the nitrogen monoxide NO in the exhaust gas is bonded to nitrogen N of the nitrogen monoxide NO adsorbed at the ultra-strong basic points, resulting in the formation of N₂O.

Next, described below is the oxidation reaction of the nitrogen monoxide NO on the exhaust gas purifying catalyst 20.

When the combustion is being conducted at a lean air-fuel ratio, the exhaust gas contains an excess of oxygen O₂. Therefore, the nitrogen monoxide N-O⁻ adsorbed at the ultra-strong basic points is oxidized with excess of oxygen O₂ to form nitric acid ions NO₃⁻. That is, when the oxygen concentration is high in the exhaust gas, the reaction proceeds in a direction to form nitric acid ions NO₃⁻. Therefore, when the combustion is being conducted at a lean air-fuel ratio, nitric acid ions NO₃⁻ are formed and held at part of the ultra-strong basic points. Here, nitric acid ions NO₃⁻ are also formed as the nitrogen monoxide NO is bonded to oxygen ions O²⁻ that are constituting the crystals. Further, nitric acid ions NO₃⁻ are often held on the exhaust gas purifying catalyst 20 in a state of being adsorbed by zirconium Zr⁴⁺ constituting the crystals.

However, nitric acid ions NO₃⁻ are decomposed when the temperature rises and are released as the nitrogen monoxide NO. As the temperature of the exhaust gas purifying catalyst 20 rises, therefore, almost no nitric acid ions NO₃⁻ are present on the exhaust gas purifying catalyst 20. If the lower limit temperature of the exhaust gas purifying catalyst 20 is referred to as a reference temperature at which almost no nitric acid ion NO₃⁻ is present on the exhaust gas purifying catalyst 20, then, the reference temperature is determined by the exhaust gas purifying catalyst 20 and is about 600°C in the case of the exhaust gas purifying catalyst 20 of the present invention. That is, when the temperature of the exhaust gas purifying catalyst 20 is lower than the reference temperature, nitric acid ions NO₃⁻ are formed on the exhaust gas purifying catalyst 20 and when the temperature of the exhaust gas purifying catalyst 20 is higher than the reference temperature, almost no nitric acid ions NO₃⁻ are present on the exhaust gas purifying catalyst 20.

When the combustion is being conducted at a lean air-fuel ratio, on the other hand, a metal such as cerium Ce carried on the exhaust gas purifying catalyst 20 is oxidized with excess of oxygen O₂ contained in the exhaust gas (Ce₂O₃ + 1/2O₂ → 2CeO₂), and oxygen is stored on the exhaust gas purifying catalyst 20. The stored oxygen remains stable in the crystalline structure and is not released from the exhaust gas purifying catalyst 20 even when the temperature of the exhaust gas purifying catalyst 20 is elevated.

Summarizing the foregoing description, when the combustion is being conducted at a lean air-fuel ratio and the temperature of the exhaust gas purifying catalyst 20 is higher than the reference temperature, oxygen ions O⁻ or nitrogen monoxide NO that has not still been dissociated are held on the exhaust gas purifying catalyst 20 at the ultra-strong basic points and, besides, stored oxygen is held on the exhaust gas purifying catalyst 20. In this case, however, nitric acid ions NO₃⁻ are almost not present on the exhaust gas purifying catalyst 20.

On the other hand, even when the combustion is being conducted at a lean air-fuel ratio and the temperature of the exhaust gas purifying catalyst 20 is lower than the reference temperature, too, oxygen ions O⁻ or nitrogen monoxide NO that has not still been dissociated are held on the exhaust gas purifying catalyst 20 at the ultra-strong basic points and, besides, stored oxygen is held on the exhaust gas purifying catalyst 20. In this case, however, nitric acid ions NO₃⁻ are formed in large amounts on the exhaust gas purifying catalyst 20.

In other words, when the temperature of the exhaust gas purifying catalyst 20 is lower than the reference temperature, the nitrogen monoxide NO in the exhaust gas changes into nitric acid ions NO₃⁻ on the exhaust gas purifying catalyst 20. At this time, therefore, large amounts of nitric acid ions NO₃⁻ are present on the exhaust gas purifying catalyst 20 but oxygen ions O⁻ are held in relatively small amounts on the exhaust gas purifying catalyst 20.

On the other hand, when the temperature of the exhaust gas purifying catalyst 20 is higher than the reference temperature, nitric acid ions NO₃⁻ which happen to be formed are readily decomposed and, hence, almost no nitric acid ion NO₃⁻ is present on the exhaust gas purifying catalyst 20. On the other hand, nitrogen monoxide NO adsorbed on the exhaust gas purifying catalyst 20 at the ultra-strong basic points is vigorously dissociated and, hence, the amount of oxygen ions O⁻ trapped at the ultra-strong basic points gradually increases.

Next, described below is a processing for recovering the NOx purifying performance of the exhaust gas purifying catalyst 20. The processing for recovery varies in accordance with the temperature of the exhaust gas purifying catalyst 20. Described below, first, is a case where the temperature of the exhaust gas purifying catalyst 20 is higher than the reference temperature.

When combustion is being conducted at a lean air-fuel ratio and the temperature of the exhaust gas purifying catalyst 20 is higher than the reference temperature, the dissociated oxygen ions O⁻ are held at the ultra-strong basic points of the exhaust gas purifying catalyst 20 as described above. Therefore, when the combustion continues at a lean air-fuel ratio, the ultra-strong basic points of the exhaust gas purifying catalyst 20 are gradually covered with oxygen ions O⁻ and, hence, the number of ultra-strong basic points capable of adsorbing the nitrogen monoxide NO gradually decreases. As a result, the NOx purification ratio gradually decreases.

In this case, if oxygen ions O⁻ held at the ultra-strong basic points are released, i.e., are purged, the exhaust gas purifying catalyst 20 resumes the initial state in which the oxygen defect is donated with an electron e⁻ as shown in Fig. 4(D). Thus, a high NOx purification ratio is obtained.

Here, as will be learned from Fig. 4(C), the ultra-strong basic points are positioned among metal ions which are electrically positive and, hence, oxygen ions O⁻ which are electrically negative are easily held among the metal ions. However, the bonding force is weak among the oxygen ions O⁻ and the metal ions and, accordingly, the oxygen ions O⁻ are in a very unstable state. Therefore, if oxygen ions O⁻ are partly purged from the ultra-strong basic points among the oxygen ions held at the ultra-strong basic points, the remaining oxygen ions O⁻ held at the ultra-strong basic points are purged at one time being induced by the purging action. Here, however, oxygen stored on the exhaust gas purifying catalyst 20 is not purged.

Though the mechanism has not been clarified yet concerning the purging of the remaining oxygen ions O⁻ at one time which is induced by the purging action of part of oxygen ions, it is presumed that the remaining oxygen ions O⁻ are purged at one time due to energy released when part of oxygen ions that are purged turn into stable oxygen molecules. In fact, it has been confirmed through experiment that if oxygen ions O⁻ held on the exhaust gas purifying catalyst 20 are partly purged from the exhaust gas purifying catalyst 20 by imparting, to the exhaust gas purifying catalyst 20, the energy necessary for purging part of oxygen ions O⁻ held on the exhaust gas purifying catalyst 20 from the exhaust gas purifying catalyst 20, then, the remaining oxygen ions O⁻ held on the exhaust gas purifying catalyst 20 are purged at one time from the exhaust gas purifying catalyst 20 and induced by the purging action. Energy that is imparted promotes the action for dissociating the nitrogen monoxide NO at the ultra-strong basic points and, hence, purges oxygen ions O⁻ dissociated from the nitrogen monoxide NO that has been adsorbed.

That is, all oxygen ions O⁻ held on the exhaust gas purifying catalyst 20 can be purged without using all energy needed for purging all oxygen ions O⁻ but using energy in amounts needed for purging part of oxygen ions O⁻ out of the oxygen ions O⁻ offering a great advantage of using a decreased amount of energy for purging oxygen ions O⁻.

Energy can be imparted in a variety of forms. For example, if the temperature of the exhaust gas or the temperature of the exhaust gas purification catalyst 20 is elevated, oxygen ions O⁻ held on the exhaust gas purification catalyst 20 are purged. Therefore, heat energy can be used as the energy to be imparted.

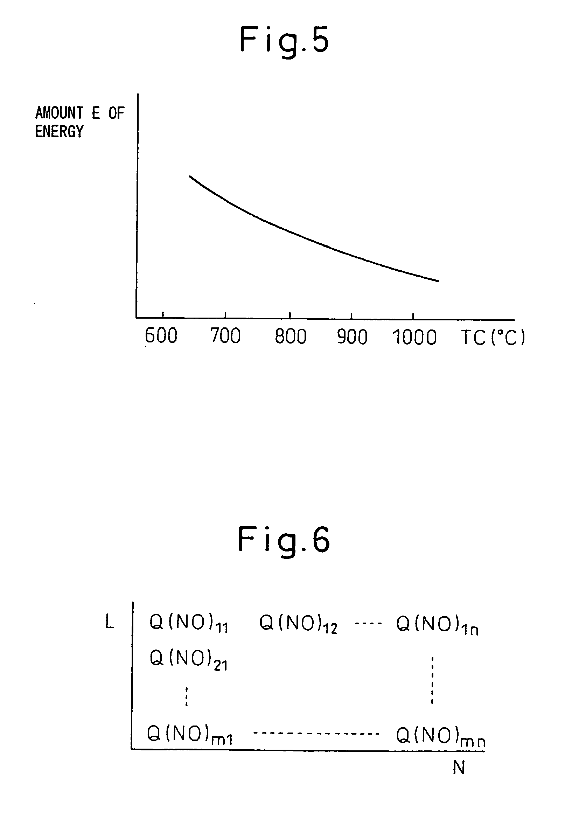

Oxygen ions O⁻ held on the exhaust gas purifying catalyst 20 tend to be released as the temperature of the exhaust gas purifying catalyst 20 rises. As shown in Fig. 5, therefore, the amount of energy E necessary for purging part of oxygen ions O⁻ held on the exhaust gas purifying catalyst 20 from the exhaust gas purifying catalyst 20, decreases with an increase in the temperature TC of the exhaust gas purifying catalyst 20.

When the temperature of the exhaust gas purifying catalyst 20 is higher than the reference temperature as described above, the combustion that is continued at a lean air-fuel ratio causes the ultra-strong basic points of the exhaust gas purifying catalyst 20 to be gradually covered with oxygen ions O⁻. Therefore, the number of the ultra-strong basic points capable of adsorbing the nitrogen monoxide NO gradually decreases. As a result, the NOx purifying ratio gradually decreases. Therefore, energy is periodically imparted to the exhaust gas purifying catalyst 20 in order to purge oxygen ions O⁻ held on the exhaust gas purifying catalyst 20 from the exhaust gas purifying catalyst 20 before the exhaust gas purifying catalyst 20 is buried with oxygen ions O⁻.

In this case, energy can be imparted at regular intervals, or every time when an integrated value of the number of revolutions of the engine has exceeded a preset value or every time when a distance traveled by the vehicle has exceeded a predetermined distance. Further, the time interval from when energy is imparted to the exhaust gas purifying catalyst 20 until when energy is imparted thereto next time may be increased with an increase in the temperature of the exhaust gas purifying catalyst 20.

Further, the total amount of oxygen ions O⁻ and nitrogen monoxide NO held by the exhaust gas purifying catalyst 20 may be estimated, and energy may be imparted when the estimated total amount has exceeded a preset amount. That is, the nitrogen oxide NO contained in the exhaust gas is held in its form or in the form of oxygen ions O⁻ after dissociated on the exhaust gas purifying catalyst 20. Therefore, the total amount of oxygen ions O⁻ and nitrogen monoxide NO held by the exhaust gas purifying catalyst 20 becomes the integrated amount of nitrogen monoxide NO contained in the exhaust gas. The amount of nitrogen monoxide NO contained in the exhaust gas is determined depending upon the operating conditions of the engine, and Fig. 6 shows the amount Q(NO) of nitrogen monoxide emitted from the engine per a unit time in the form of a map as a function of the engine load L and the engine rotational speed N as found through experiment.

When the above map is used, the total amount of oxygen ions O⁻ and nitrogen monoxide NO held by the exhaust gas purifying catalyst 20 can be estimated from the integrated value of the amount Q(NO) of nitrogen monoxide shown in Fig. 6. According to the present invention, therefore, the integrated value of the amount Q(NO) of nitrogen monoxide shown in Fig. 6 is used as the estimated total amount of oxygen ions O⁻ and nitrogen oxide NO held by the exhaust gas purifying catalyst 20.

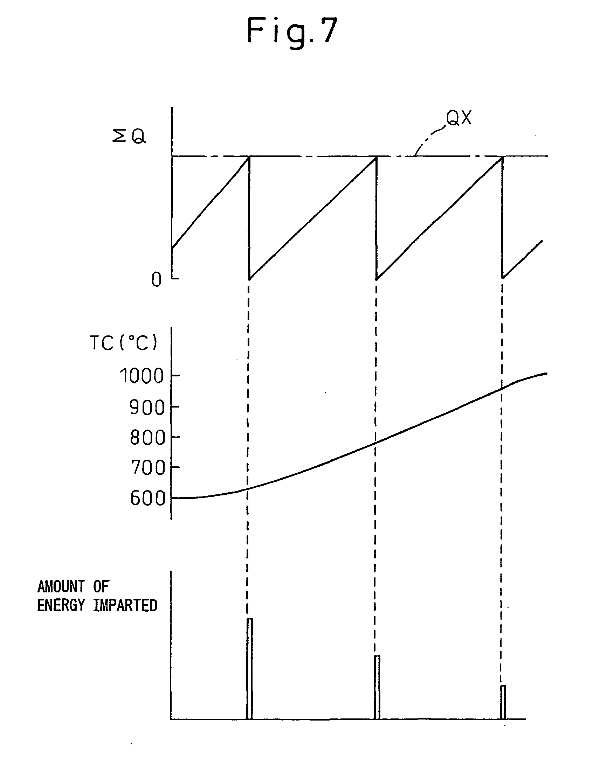

Fig. 7 illustrates a relationship between the integrated value ΣQ of Q(NO) shown in Fig. 6 and the temperature TC of the exhaust gas purifying catalyst 20 of when the temperature of the exhaust gas purifying catalyst 20 is higher than the reference temperature.

From Fig. 7, energy is imparted when the integrated amount ΣQ of oxygen ions O⁻ and nitrogen monoxide NO held on the exhaust gas purifying catalyst 20 exceeds a preset amount QX. Here, oxygen ions O⁻ held on the exhaust gas purifying catalyst 20 are purged. When energy is imparted, further, dissociation of nitrogen monoxide NO adsorbed by the exhaust gas purifying catalyst 20 is promoted, and oxygen ions O⁻ that are dissociated are also purged. Further, when the temperature of the exhaust gas purifying catalyst 20 is high as described above, the oxygen ions O⁻ are easily purged when the energy is imparted. When the amount of oxygen ions O⁻ held by the exhaust gas purifying catalyst 20 remains the same, therefore, the oxygen ions O⁻ can all be purged even with a small amount of energy as the temperature of the exhaust gas purifying catalyst 20 rises. As shown in Fig. 7, therefore, the amount of energy to be imparted to the exhaust gas purifying catalyst 20 can be decreased with an increase in the temperature TC of the exhaust gas purifying catalyst 20.

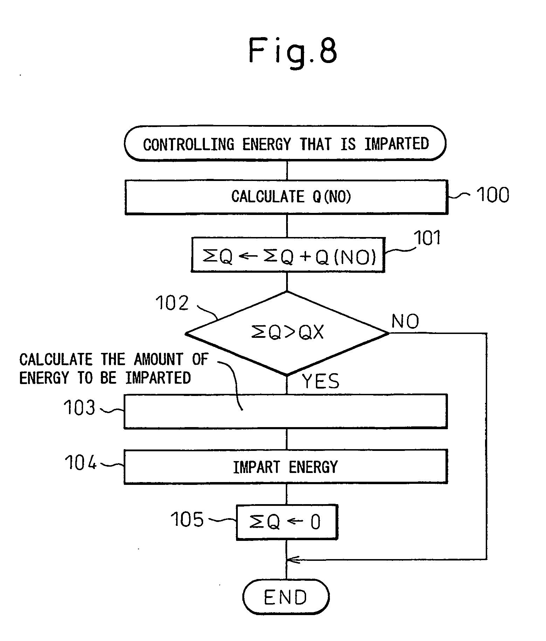

Fig. 8 illustrates a control routine for imparting energy.

Referring to Fig. 8, first, the amount Q(NO) of nitrogen monoxide is calculated at step 100 from the map shown in Fig. 6. Next, at step 101, Q(NO) is added to ΣQ to calculate the integrated amount ΣQ. At step 102, next, it is judged if the integrated amount ΣQ has exceeded a preset amount QX. When ΣQ > QX, the routine proceeds to step 103 to calculate the amount of energy to be imparted. Next, at step 104, a processing is executed for imparting energy and at step 105, ΣQ is cleared.

Described below is a second embodiment that uses the exhaust gas purifying catalyst of the present invention to produce energy that is to be imparted by using a reducing agent fed into the combustion chamber 5 or into the exhaust gas, and to feed the reducing agent into the combustion chamber 5 or into the exhaust gas to enrich the air-fuel ratio in the combustion chamber 5 or to enrich the air-fuel ratio of the exhaust gas like spike when the temperature of the exhaust gas purifying catalyst 20 is higher than the reference temperature determined by the exhaust gas purifying catalyst 20 under a condition where the combustion is being conducted at a lean air-fuel ratio and when oxygen ions O⁻ held on the exhaust gas purifying catalyst 20 is to be purged from the exhaust gas purifying catalyst 20.

In this case, the reducing agent is fed to periodically enrich the air-fuel ratio in the combustion chamber 5 or to enrich the air-fuel ratio of the exhaust gas, for example, at regular intervals, or every time when the integrated value of the number of revolutions of the engine has exceeded a preset value or every time when the distance traveled by the vehicle has exceeded a predetermined distance.

In the second embodiment, too, the rich control of the air-fuel ratio can be conducted based on the total integrated amount of oxygen ions O⁻ and nitrogen monoxide NO held on the exhaust gas purifying catalyst 20.

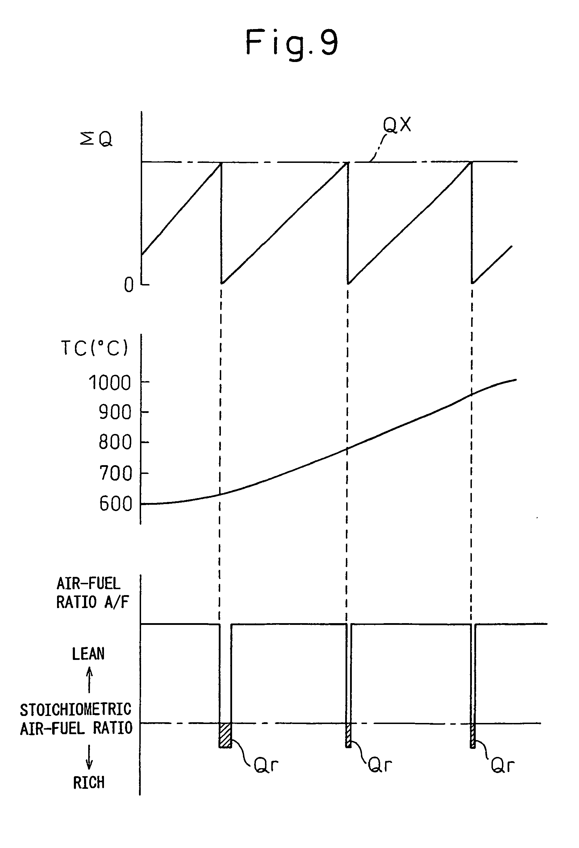

Fig. 9 illustrates a case where the rich control is executed.

Namely, when the total integrated amount ΣQ of oxygen ions O⁻ and nitrogen monoxide NO held on the exhaust gas purifying catalyst 20 exceeds the preset value QX, the reducing agent is fed into the combustion chamber 5 or into the exhaust gas to enrich the air-fuel ratio A/F in the combustion chamber 5 or of the exhaust gas like a spike thereby to purge oxygen ions O⁻ held by the exhaust gas purifying catalyst 20.

This embodiment uses the fuel containing hydrocarbons as a reducing agent. Here, the fuel that works as the reducing agent is an excess of a fuel component relative to the stoichiometric air-fuel ratio. That is, if reference is made to Fig. 9, the hatched portion on the side richer than the stroichiometric air-fuel ratio represents the amount Qr of the reducing agent. The reducing agent can be fed into the combustion chamber 5 or can be fed into the exhaust gas emitted from the combustion chamber 5 by increasing the amount of injection from the fuel injector 6.

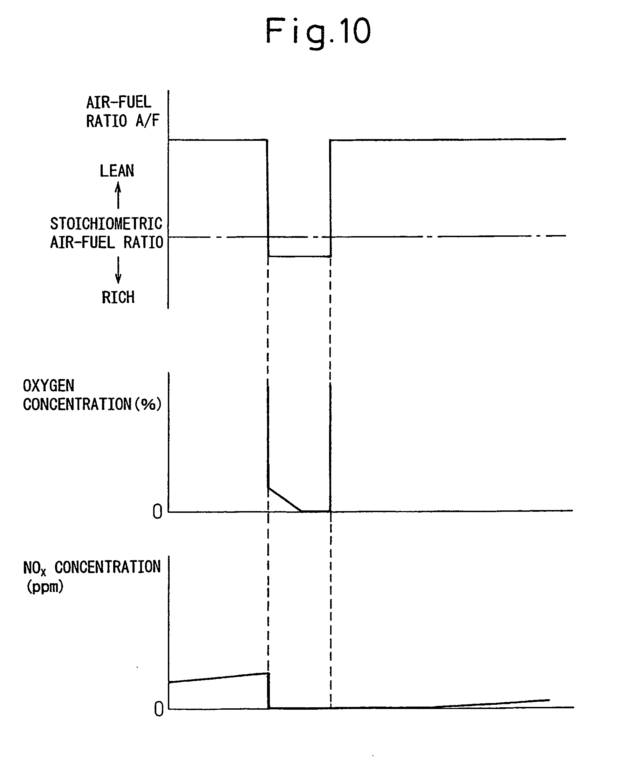

If the reducing agent is fed to the exhaust gas purifying catalyst 20 in an amount necessary for releasing part of oxygen held on the exhaust gas purifying catalyst 20 from the exhaust gas purifying catalyst 20 when the temperature of the exhaust gas purifying catalyst 20 is higher than the reference temperature determined by the exhaust gas purifying catalyst 20 while the combustion is being conducted at a lean air-fuel ratio, then, remaining oxygen held on the exhaust gas purifying catalyst 20 is purged from the exhaust gas purifying catalyst 20. The phenomenon in this case will be described in further detail with reference to Fig. 10.

Fig. 10 illustrates changes in the oxygen concentration (%) and changes in the NOx concentration (p.p.m.) in the exhaust gas flowing out from the exhaust gas purifying catalyst 20 when the air-fuel ratio A/F of the exhaust gas flowing into the exhaust gas purifying catalyst 20 is maintained lean and is enriched like a spike.

When the combustion is conducted at a lean air-fuel ratio and the temperature of the exhaust gas purifying catalyst 20 is higher than the reference temperature, oxygen ions O⁻ and nitrogen monoxide NO are held on the exhaust gas purifying catalyst 20 and, besides, oxygen that is stored is held on the exhaust gas purifying catalyst 20. However, nitric acid ions NO₃⁻ are almost not present on the exhaust gas purifying catalyst 20.

When the air-fuel ratio A/F is changed from lean over to rich in this state, oxygen ions O⁻ held on the exhaust gas purifying catalyst 20 are partly released from the ultra-strong basic points, and the remaining oxygen ions O⁻ are released at one time being induced by the releasing action of the oxygen ions O⁻. The exhaust gas usually contains unburned oxygen even when the air-fuel ratio A/F becomes rich. Here, if unburned oxygen is neglected, the oxygen concentration in the exhaust gas flowing out from an ordinary catalyst becomes zero when the air-fuel ratio A/F is changed from lean over to rich.

In the exhaust gas purifying catalyst 20 of the present invention, however, oxygen ions O⁻ held on the exhaust gas purifying catalyst 20 are released when the air-fuel ratio A/F is changed from lean over to rich. Therefore, the oxygen concentration in the exhaust gas flowing out from the exhaust gas purifying catalyst 20 does not become zero when affected by the released oxygen ions O⁻ as shown in Fig. 10. Namely, when the air-fuel ratio A/F is changed from lean over to rich, the released oxygen ions O⁻ are partly reduced but most of the released oxygen ions O⁻ are emitted from the exhaust gas purifying catalyst 20 in the form of oxygen molecules O₂ without being reduced with the reducing agent. When the air-fuel ratio A/F is changed from lean over to rich, therefore, the exhaust gas flowing out from the exhaust gas purifying catalyst 20 contains oxygen in some amounts as shown in Fig. 10. The amount of oxygen ions O⁻ released degreases with the passage of time and, hence, the oxygen concentration gradually decreases to zero as shown in Fig. 10. After once being decreased to zero, the oxygen concentration is maintained at zero while the air-fuel ratio A/F has been enriched. When the air-fuel ratio A/F is changed from rich over to lean, the nitrogen oxide NO held at the ultra-strong basic point of the exhaust gas purifying catalyst 20 is partly dissociated, and the dissociated oxygen ions O⁻ are released. At this moment, further, the remaining nitrogen monoxide NO is reduced with the reducing agent and is decomposed into nitrogen and carbon dioxide, while oxygen O²⁻ stored in the exhaust gas purifying catalyst 20 is reduced with the reducing agent. While the air-fuel ratio A/F has been enriched, therefore, the NOx concentration becomes zero in the exhaust gas that flows out from the exhaust gas purifying catalyst 20 as shown in Fig. 10.

Upon feeding the reducing agent as described above, oxygen ions O⁻ can be partly purged from the exhaust gas purifying catalyst 20, and the remaining oxygen ions O⁻ held on the exhaust gas purifying catalyst 20 can be purged from the exhaust gas purifying catalyst 20 being induced by the above purging action. Upon feeding the reducing agent, further, the nitrogen oxide NO adsorbed on the exhaust gas purifying catalyst 20 can be reduced. It is therefore very desirable to produce energy that is to be imparted by using the reducing agent.

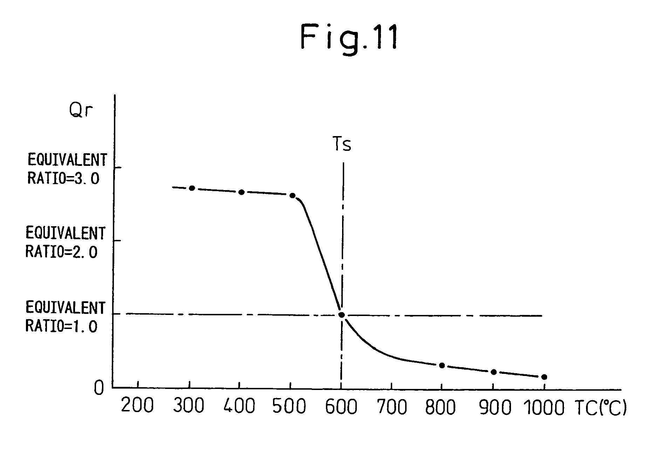

Fig. 11 illustrates a relationship between the temperature TC of the exhaust gas purifying catalyst 20 and the amount Qr of the reducing agent represented by an equivalent ratio that is necessary for enriching the air-fuel ratio for recovering the purifying performance of the exhaust gas purifying catalyst 20. Here, when the nitrogen monoxide NO is to be reduced with the reducing agent, the amount of the reducing agent necessary for reducing the nitrogen monoxide NO is referred to as the amount Qr of the reducing agent having an equivalent ratio (reducing agent/NO) of 1, the nitrogen monoxide NO being formed from when the air-fuel ratio in the combustion chamber 5 is once enriched or from when the air-fuel ratio of the exhaust gas is once enriched until when the air-fuel ratio in the combustion chamber 5 is enriched again or until when the air-fuel ratio of the exhaust gas is enriched again. In other words, when it is presumed that the nitrogen monoxide NO in the exhaust gas is all occluded by the exhaust gas purifying catalyst 20 in the form of nitric acid ions NO₃⁻, the amount Qr of the reducing agent theoretically necessary for reducing the occluded nitric acid ions NO₃⁻ is referred to as the amount of the reducing agent of an equivalent ratio = 1.

It will be learned from Fig. 11 that when the temperature TC of the exhaust gas purifying catalyst 20 is higher than the reference temperature Ts, the equivalent ratio of the amount of the reducing agent becomes smaller than 1.0. In other words, when the temperature TC of the exhaust gas purifying catalyst 20 is higher than the reference temperature Ts, the amount Qr of the reducing agent for enriching the air-fuel ratio in the combustion chamber 5 or for enriching the air-fuel ratio of the exhaust gas for purging oxygen ions O⁻ held on the exhaust gas purifying catalyst 20, is smaller than the amount of the reducing agent, i.e., smaller than the amount of the reducing agent having an equivalent ratio of 1.0 which is necessary for reducing the nitrogen monoxide NO formed from when the air-fuel ratio in the combustion chamber 5 is enriched last time or from when the air-fuel ratio of the exhaust gas is enriched last time until when the air-fuel ratio in the combustion chamber 5 is enriched this time or until when the air-fuel ratio of the exhaust gas is enriched this time.

In the embodiment using the exhaust gas purifying catalyst of the present invention, NOx can be purified up to a temperature TC of the exhaust gas purifying catalyst 20 as high as about 1,000°C. Further, the purifying performance of the exhaust gas purifying catalyst 20 can be recovered upon feeding the reducing agent of an amount of an equivalent ratio of 1.0 or smaller for enriching the air-fuel ratio up to a temperature TC of the exhaust gas purifying catalyst 20 as high as about 1,000°C. That is, the NOx purifying performance of the exhaust gas purifying catalyst 20 can be recovered by feeding the reducing agent in an amount smaller than the amount necessary for reducing the nitrogen monoxide NO that is fed into the exhaust gas purifying catalyst 20 and, hence, the amount of fuel consumption can be decreased for recovering the NOx purifying performance.

As will be understood from Fig. 11, when the temperature TC of the exhaust gas purifying catalyst 20 is about 800°C, the air-fuel ratio can be enriched requiring the reducing agent in an amount Qr which is about one-third the amount of the reducing agent, i.e., one-third the amount of the reducing agent having an equivalent ratio of 1.0 necessary for reducing the nitrogen monoxide NO contained in the exhaust gas flowing into the exhaust gas purifying catalyst 20. When the temperature TC of the exhaust gas purifying catalyst 20 is about 900°C, the air-fuel ratio can be enriched requiring the reducing agent in an amount Qr which is about one-fourth the amount of the reducing agent necessary for reducing the nitrogen monoxide NO contained in the exhaust gas flowing into the exhaust gas purifying catalyst 20. When the temperature TC of the exhaust gas purifying catalyst 20 is about 1,000°C, the air-fuel ratio can be enriched requiring the reducing agent in an amount Qr which is about one-sixth the amount of the reducing agent necessary for reducing the nitrogen monoxide NO contained in the exhaust gas flowing into the exhaust gas purifying catalyst 20. That is, from Figs. 9 to 11, it will be learned that the oxygen ions O⁻ held on the exhaust gas purifying catalyst 20 can be purged by using the reducing agent in an amount Qr which decreases with an increase in the temperature TC of the exhaust gas purifying catalyst 20.

When the temperature TC of the exhaust gas purifying catalyst 20 is lower than the reference temperature Ts, on the other hand, the air-fuel ratio can be enriched as shown in Fig. 10 by feeding the reducing agent in an amount Qr of an equivalent ratio of not smaller than 1.0. That is, oxygen ions O⁻ and nitrogen monoxide NO are held on the exhaust gas purifying catalyst 20 even when the combustion is being conducted at a lean air-fuel ratio as described above and the temperature TC of the exhaust gas purifying catalyst 20 is lower than the reference temperature Ts. Besides, the stored oxygen is held on the exhaust gas purifying catalyst 20. In this case, however, the nitrogen monoxide NO in the exhaust gas is converted into nitric acid ions NO₃⁻ on the exhaust gas purifying catalyst 20 and, hence, nitric acid ions NO₃⁻ are present in large amounts on the exhaust gas purifying catalyst 20. However, oxygen ions O⁻ and nitrogen monoxide NO are held in small amounts on the exhaust gas purifying catalyst 20. That is, when the temperature TC of the exhaust gas purifying catalyst 20 is lower than the reference temperature Ts, the nitrogen monoxide NO in the exhaust gas is occluded by the exhaust gas purifying catalyst 20 mostly in the form of nitric acid ions NO₃⁻ and, thus, NOx in the exhaust gas is purified.

In this case, too, if the air-fuel ratio is enriched, nitric acid ions NO₃⁻ and nitrogen monoxide NO occluded by the exhaust gas purifying catalyst 20 are reduced. However, the efficiency for reducing nitric acid ions NO₃⁻ with the reducing agent is not 100 percent. To reduce the nitric acid ions NO₃⁻ occluded in the exhaust gas purifying catalyst 20, therefore, it becomes necessary to use the reducing agent in an amount greater than that of the reducing agent necessary for reducing nitric acid ions NO₃⁻ and nitrogen monoxide NO occluded by the exhaust gas purifying catalyst 20. To enrich the air-fuel ratio as described above, therefore, the reducing agent must be fed in an amount Qr having an equivalent ratio which is not smaller than 1.0.

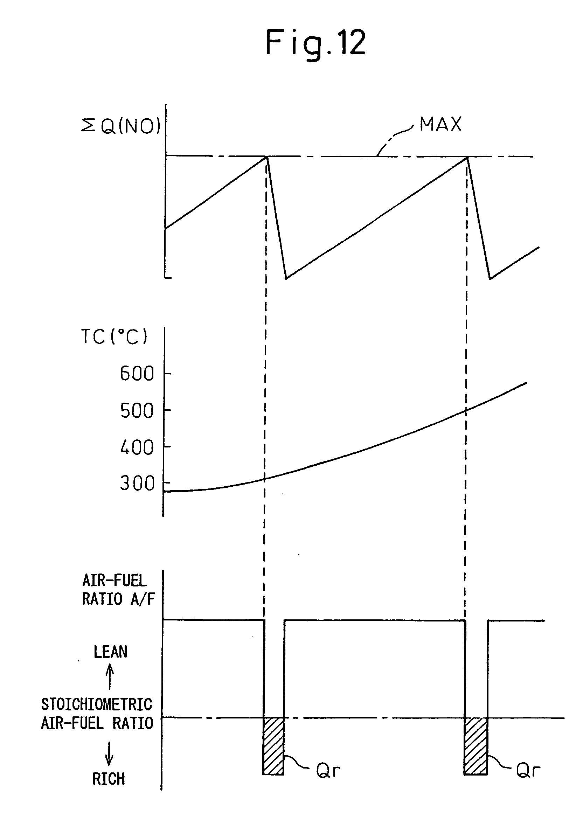

Even when the temperature TC of the exhaust gas purifying catalyst 20 is lower than the reference temperature Ts, the amount Q(NO) of nitrogen monoxide calculated from the map shown in Fig. 6 is integrated, and the air-fuel ratio A/F is temporarily enriched when the integrated amount ΣQ(NO) has exceeded the permissible amount MAX as shown in Fig. 12. This recovers the purifying performance of the exhaust gas purifying catalyst 20. Comparison of Fig. 12 with Fig. 9 shows that the amount Qr of the reducing agent in this case is considerably greater than that of the case of Fig. 9. It will further be learned that the amount Qr of the reducing agent is not dependent upon the temperature TC of the exhaust gas reducing catalyst 20.

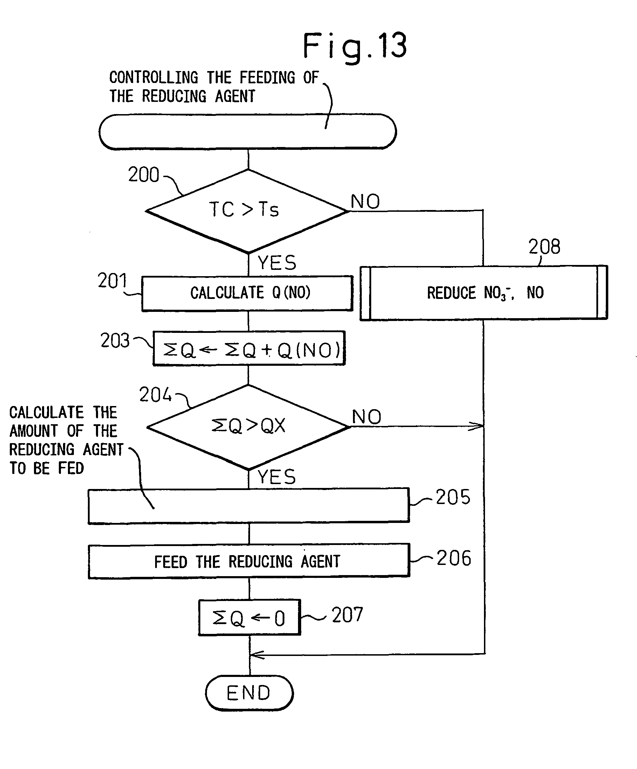

Fig. 13 illustrates a routine for controlling the feeding of the reducing agent.

Referring to Fig. 13, it is judged, first, at step 200 if the temperature TC of the exhaust gas purifying catalyst 20 is higher than the reference temperature Ts. When TC > Ts, the routine proceeds to step 201 to purge oxygen held by the exhaust gas purifying catalyst 20. That is, at step 201, the amount Q(NO) of nitrogen monoxide is calculated from the map shown in Fig. 6. Next, at step 203, Q(NO) is added to ΣQ to calculate the integrated amount ΣQ. Next, at step 204, it is judged if the integrated amount ΣQ has exceeded the preset value QX. When ∑Q > QX, the routine proceeds to step 205 where the amount of the reducing agent to be fed is calculated. Next, at step 206, the reducing agent is fed to enrich the air-fuel ratio and at step 207, ΣQ is cleared.

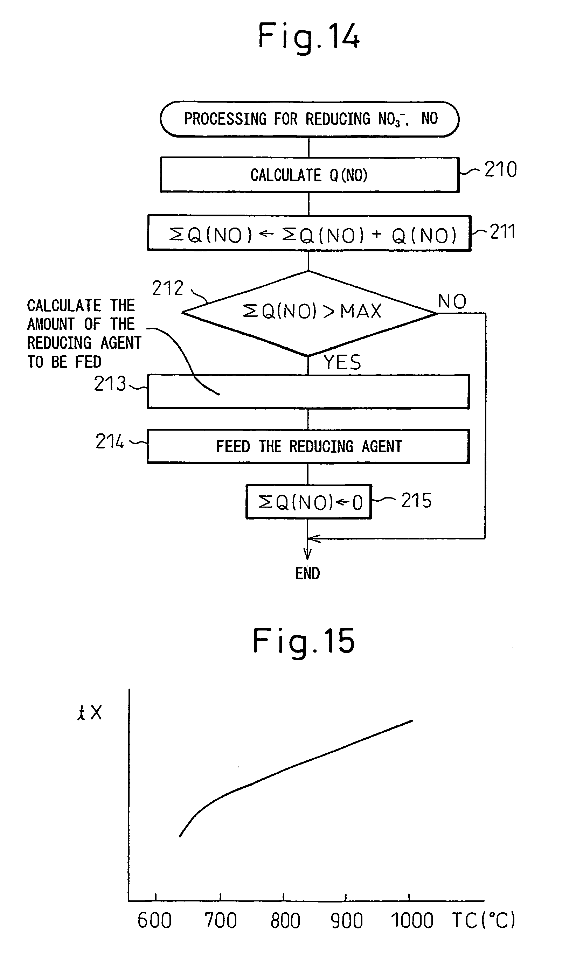

When it is judged at step 200 that TC ≤ Ts, on the other hand, the routine proceeds to step 209 where an NO reduction processing is executed to reduce nitric acid ions NO₃⁻ and nitrogen monoxide NO occluded by the exhaust gas purifying catalyst 20. Fig. 14 illustrates the NO reduction processing. Referring to Fig. 14, first, the amount Q(NO) of the nitrogen monoxide is integrated at step 210 from the map shown in Fig. 6. At step 211, Q(NO) is added to ΣQ to calculate the integrated amount ΣQ(NO). Next, at step 212, it is judged whether the integrated amount ΣQ(NO) has exceeded the permissible amount MAX. When ΣQ(NO) > MAX, the routine proceeds to step 213 to calculate the amount of the reducing agent to be fed. Next, at step 214, the reducing agent is fed to enrich the air-fuel ratio and at step 215, ∑Q (NO) is cleared.

Here, when the temperature TC of the exhaust gas purifying catalyst 20 is higher than the reference temperature Ts as described above, the air-fuel ratio can be enriched by using the reducing agent in an amount Qr that can be decreased with an increase in the temperature TC of the exhaust gas purifying catalyst 20. This means that when the amount Qr of the reducing agent is set to be nearly constant, the time interval from when the air-fuel ratio is enriched until when it is enriched again can be lengthened with an increase in the temperature TC of the exhaust gas purifying catalyst 20.

In a third embodiment using the exhaust gas purifying catalyst of the present invention, therefore, the time interval tX is increased, as shown in Fig. 15, with an increase in the temperature TC of the exhaust gas purifying catalyst 20 from when the air-fuel ratio in the combustion chamber 5 is enriched or the air-fuel ratio of the exhaust gas is enriched until when the air-fuel ratio in the combustion chamber 5 is enriched next or the air-fuel ratio of the exhaust gas is enriched next, in order to purge oxygen ions O⁻ held on the exhaust gas purifying catalyst 20.

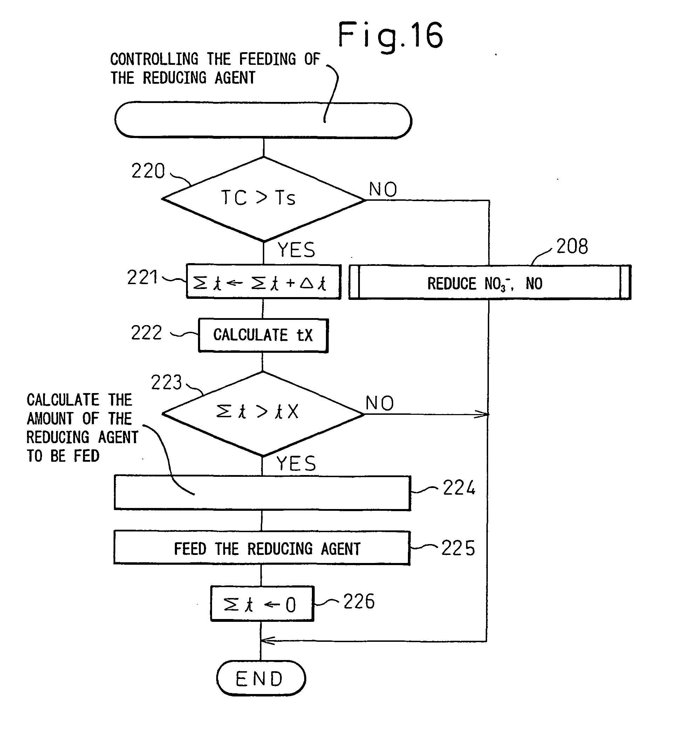

Fig. 16 illustrates a routine for controlling the feeding of the reducing agent for executing the third embodiment.

Referring to Fig. 16, it is judged, first, at step 220 if the temperature TC of the exhaust gas purifying catalyst 20 is higher than the reference temperature Ts. When TC > Ts, the routine proceeds to step 221 where a time Δt from the processing cycle of the last time to the processing cycle of this time is added to Σt thereby to calculate the elapsed time Σt. Next, at step 222, a target elapsed time tX is calculated from Fig. 13. Next, at step 223, it is judged if the elapsed time Σt has exceeded a target elapsed time tX. When Σt > tX, the routine proceeds to step 224 where the amount of the reducing agent to be fed is calculated. Next, at step 225, the reducing agent is fed to enrich the air-fuel ratio. Next, at step 226, Σt is cleared.

When it is judged at step 220 that TC ≤ Ts, on the other hand, the routine proceeds to step 208 where the NO reduction processing of Fig. 14 is executed.

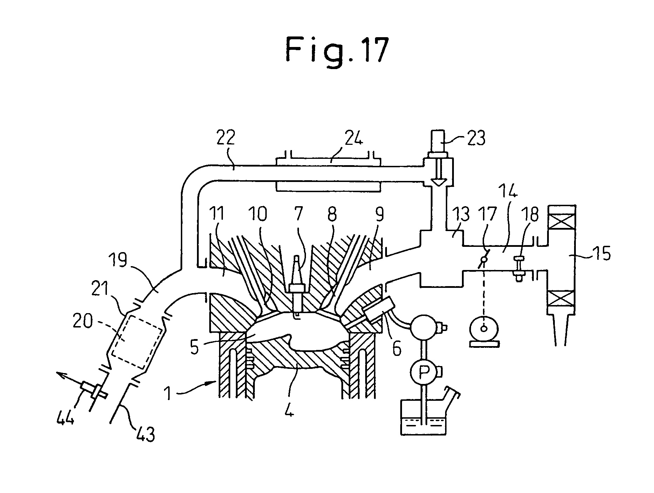

Fig. 17 illustrates a fourth embodiment. In this embodiment as shown in Fig. 17, a NOx concentration sensor 44 is disposed in the exhaust pipe 43 downstream of the exhaust gas purifying catalyst 20 to detect the NOx concentration in the exhaust gas that has passed through the exhaust gas purifying catalyst 20.

While the ultra-strong basic points of the exhaust gas purifying catalyst 20 have not been covered with oxygen ions O⁻, NOx contained in the exhaust gas is trapped by the exhaust gas purifying catalyst 20. Therefore, NOx is not almost contained in the exhaust gas flowing out from the exhaust gas purifying catalyst 20. However, as a considerable proportion of the ultra-strong basic points of the exhaust gas purifying catalyst 20 comes to be buried with oxygen ions O⁻, NOx passes in a gradually increasing amount through the exhaust gas purifying catalyst 20 without being trapped by the exhaust gas purifying catalyst 20. According to the fourth embodiment, therefore, when the NOx concentration in the exhaust gas flowing out from the exhaust gas purifying catalyst 20 has exceeded a permissible value, it is so judged that a considerable proportion of the ultra-strong basic points is buried with oxygen ions O⁻, and the air-fuel ratio of the exhaust gas flowing into the exhaust gas purifying catalyst 20 is enriched like a spike from a lean state.

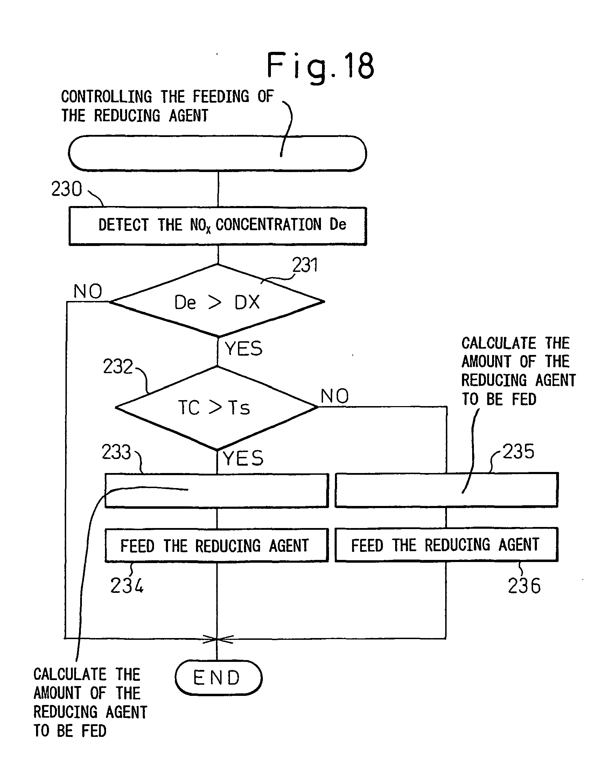

Fig. 18 illustrates a routine for controlling the feeding of the reducing agent for executing the fourth embodiment.

Referring to Fig. 18, first, the NOx concentration De in the exhaust gas flowing out from the exhaust gas purifying catalyst 20 is detected by the NOx concentration sensor 44 at step 230. Next, at step 231, it is judged if the NOx concentration De detected by the NOx concentration sensor 44 is greater than the permissible value DX. When De ≤ DX, the processing cycle ends. When De > DX, on the other hand, the routine proceeds to step 232 where it is judged if the temperature TC of the exhaust gas purifying catalyst 20 is higher than the reference temperature Ts. When TC > Ts, the routine proceeds to step 233 where the amount of the reducing agent to be fed is calculated. Next, at step 234, the reducing agent is fed to enrich the air-fuel ratio. Here, the amount of the reducing agent that is fed is smaller than an equivalent ratio = 1.

On the other hand, when it is judged at step 232 that TC ≤ Ts, the routine proceeds to step 235 where the amount of the reducing agent to be fed is calculated. Next, at step 236, the reducing agent is fed to enrich the air-fuel ratio. Here, the amount of the reducing agent that is fed is greater than an equivalent ratio =1.

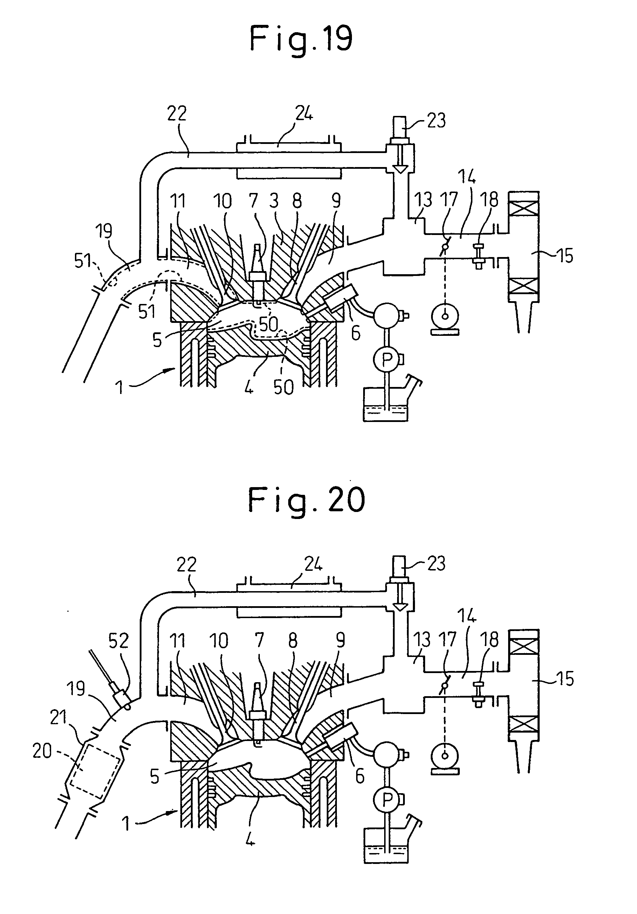

Fig. 19 illustrates a further embodiment. In this embodiment as represented by a broken line, an exhaust gas purifying catalyst 50 is carried on an inner wall surface of the cylinder head 3 or on an inner wall surface of the combustion chamber 5, such as the top surface of the piston 4, or an exhaust gas purifying catalyst 51 is carried on an inner wall surface of the exhaust port 11 or on an inner wall surface of an exhaust passage, such as the inner wall surface of the exhaust manifold 19. When the exhaust gas purifying catalyst 50 is carried on the inner wall surface of the combustion chamber 5, the combustion gas or the combusted gas in the combustion chamber 5 comes in contact with the exhaust gas purifying catalyst 50, whereby nitrogen oxides or chiefly the nitrogen monoxide NO contained in the combustion gas or in the combusted gas is adsorbed by the exhaust gas purifying catalyst 50 and is, then, dissociated into nitrogen N and oxygen O. When the exhaust gas purifying catalyst 51 is carried on the inner wall surface of the exhaust gas passage, the exhaust gas emitted from the combustion chamber 5 comes in contact with the exhaust gas purifying catalyst 51, whereby the nitrogen monoxide NO contained in the exhaust gas is adsorbed by the exhaust gas purifying catalyst 51 and is, then, dissociated into nitrogen N and oxygen O.

In an embodiment shown in Fig. 20, a reducing agent feed valve 52 is disposed in the exhaust manifold 19 upstream of the exhaust gas purifying catalyst 20, and the reducing agent is fed into the exhaust gas from the reducing agent feed valve 52 when the air-fuel ratio of the exhaust gas is to be enriched.

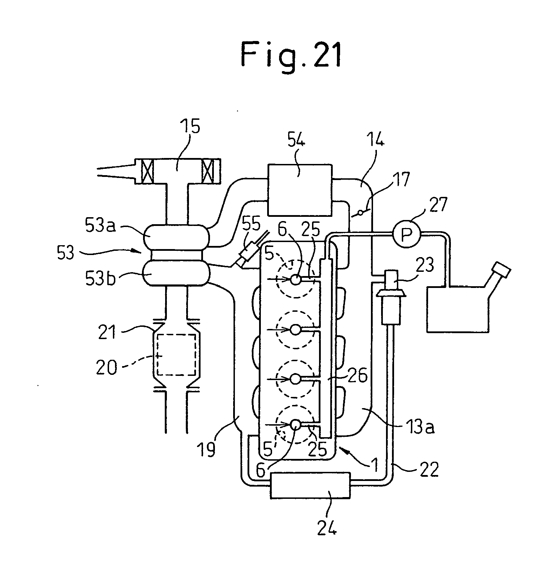

Fig. 21 illustrates a case where the present invention is applied to a compression ignition internal combustion engine. In Fig. 21, the same constitutions as those of the spark ignition internal combustion engine shown in Fig. 3 are denoted by the same reference numerals. In Fig. 21, reference numeral 1 denotes an engine body, 5 denotes combustion chambers in the cylinders, 6 denotes electrically controlled fuel injectors for injecting the fuel into the combustion chambers 5, 13a denotes an intake manifold, and 19 denotes an exhaust manifold. The intake manifold 13a is coupled to an outlet of a compressor 53a of an exhaust turbo charger 53 through an intake duct 14, and an inlet of the compressor 53a is coupled to an air cleaner 15. A throttle valve 17 is arranged in the intake duct 14 which is surround by a cooling device 54 that cools the intake air flowing through the intake duct 14. On the other hand, the exhaust manifold 19 is coupled to the inlet of an exhaust turbine 53b of the exhaust turbo charger 53, and the outlet of the exhaust turbine 53b is coupled to the catalytic converter 21 that contains the exhaust gas purifying catalyst 20. A reducing agent feed valve 55 is arranged at the collected outlet of the exhaust manifold 19 to feed the reducing agent which comprises, for example, hydrocarbons for enriching the air-fuel ratio of the exhaust gas. The exhaust manifold 19 and the intake manifold 13a are coupled together through an EGR passage 22, and an electrically controlled EGR control valve 23 is arranged in the EGR passage 22. Further, the EGR passage 22 is surrounded by a cooling device 24 that cools the EGR gas flowing through the EGR passage 22. The fuel injectors 6 are connected to a common rail 26 through fuel feed pipes 25. The fuel is fed into the common rail 26 from an electrically controlled fuel pump 27 capable of varying the amount of ejection.

In the compression ignition internal combustion engine, combustion is continuously conducted at a lean air-fuel ratio, and the reducing agent is fed into the exhaust gas from the reducing agent feed valve 55 to periodically enrich, as a spike, the air-fuel ratio of the exhaust gas to recover the purifying performance of the exhaust gas purifying catalyst 20.

In the compression ignition internal combustion engine, too, when the temperature TC of the exhaust gas purifying catalyst 20 is higher than the reference temperature Ts determined by the exhaust gas purifying catalyst 20, the amount of the reducing agent periodically fed must be smaller than the amount of the reducing agent necessary for reducing NOx flowing into the exhaust gas purifying catalyst 20 from when the reducing agent was fed last time until when the reducing agent is fed this time. When the temperature TC of the exhaust gas purifying catalyst 20 is lower than the reference temperature Ts determined by the exhaust gas purifying catalyst 20, the amount of the reducing agent periodically fed must be larger than the amount of the reducing agent necessary for reducing NOx flowing into the exhaust gas purifying catalyst 20 from when the reducing agent was fed last time until when the reducing agent is fed this time.

Next, described below is an embodiment in which a particulate filter is arranged in place of the exhaust gas purifying catalyst 20 shown in Fig. 21, and a layer of the exhaust gas purifying catalyst is formed on the particulate filter.

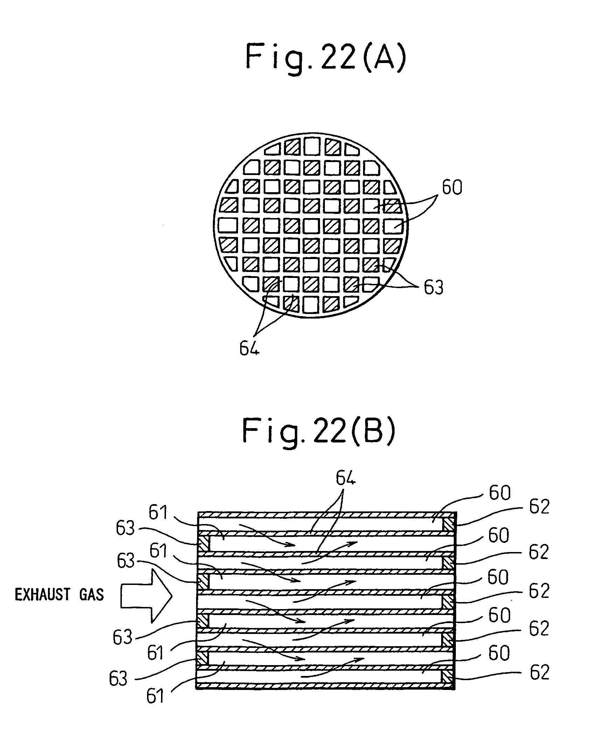

Figs. 22(A) and 22(B) illustrate the structure of the particulate filter. Fig. 22(A) is a front view of the particulate filter, and Fig. 22(B) is a side sectional view of the particulate filter. As shown in Figs. 22(A) and 22(B), the particulate filter has a honeycomb structure and includes a plurality of exhaust passages 60, 61 extending in parallel with each other. The exhaust passages are constituted by exhaust gas flow-in passages of which the downstream ends are closed with plugs 62, and exhaust gas flow-out passages 61 of which the upstream ends are closed with plugs 63. In Fig. 22(A), hatched portions represent the plugs 63. Therefore, the exhaust gas flow-in passages 60 and the exhaust gas flow-out passages 61 are alternately arranged via thin partitioning walls 64. In other words, the exhaust gas flow-in passages 60 and the exhaust gas flow-out passages 61 are so arranged that each exhaust gas flow-in passage 60 is surrounded by four exhaust gas flow-out passages 61, and each exhaust gas flow-out passage 61 is surrounded by four exhaust gas flow-in passages 60.

The particulate filter is made of a porous material such as cordierite and, hence, the exhaust gas flowing into the exhaust gas flow-in passages 60 flows out into the neighboring exhaust gas flow-out passages 61 passing through the surrounding partitioning walls 64 as represented by arrows in Fig. 22(B). In this embodiment, the layer of the exhaust gas purifying catalyst is formed on the peripheral wall surfaces of the exhaust gas flow-in passages 60 and of the exhaust gas flow-out passages 61, i.e., formed on the surfaces on both sides of the partitioning walls 64 and on the inner wall surfaces of pores in the partitioning walls 64.

In this embodiment, too, the air-fuel ratio of the exhaust gas is enriched when the NOx purifying performance of the exhaust gas purifying catalyst is to be recovered. In this embodiment, further, the particulates contained in the exhaust gas are trapped by the particulate filter and are successively burned by the heat of the exhaust gas. When a large amount of particulates is deposited on the particulate filter, the reducing agent is fed to elevate the temperature of the exhaust gas, and the deposited particulates are ignited and burned.

Next, described below is a low-temperature combustion method adapted to enriching the air-fuel ratio in the combustion chamber for recovering the NOx purifying performance of the exhaust gas purifying catalyst in a compression ignition internal combustion engine.

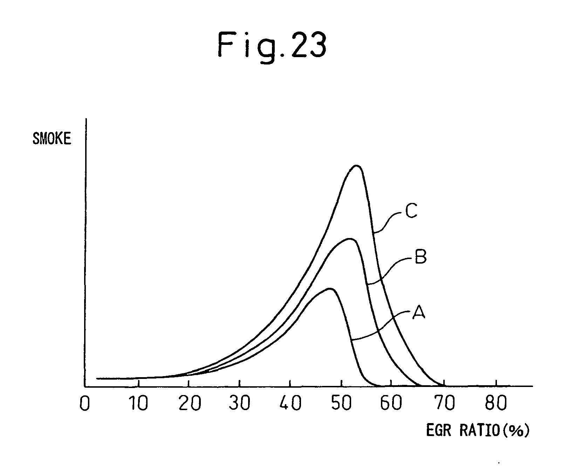

In the compression ignition internal combustion engine shown in Fig. 21, the amount of smoke that is produced gradually increases and reaches a peak with an increase in the EGR ratio (amount of EGR gas/(amount of EGR gas + amount of intake air)) and, thereafter, the amount of smoke that is produced sharply decreases as the EGR ratio further increases. This will now be described with reference to Fig. 23 which illustrates a relationship between the EGR ratio and the smoke when the EGR gas is cooled to various degrees. In Fig. 23, a curve A represents a case where the temperature of the EGR gas is maintained nearly at 90°C by forcibly cooling the EGR gas, a curve B represents a case where the EGR gas is cooled by using a small cooling device, and a curve C represents a case where the EGR gas is not forcibly cooled.

When the EGR gas is forcibly cooled as represented by the curve A in Fig. 23, the amount of smoke that is produced reaches a peak at a point where the EGR ratio is slightly lower than 50 percent. In this case, smoke is almost not produced if the EGR rate is set to be not lower than about 55 percent. When the EGR gas is slightly cooled as represented by the curve B in Fig. 23, on the other hand, the amount of smoke that is produced reaches a peak at a point where the EGR ratio is slightly higher than 50 percent. In this case, smoke is almost not produced if the EGR ratio is set to be not lower than about 65 percent. When the EGR gas is not forcibly cooled as represented by the curve C in Fig. 23, the amount of smoke that is produced reaches a peak near a point where the EGR ratio is 55 percent. In this case, smoke is almost not produced if the EGR ratio is set to be not lower than about 70 percent.

Thus, the smoke is not produced if the EGR gas ratio is set to be not lower than 55 percent. This is because the temperature of the fuel and the surrounding gas is not so high during the combustion which is based on the endothermic action of the EGR gas, i.e., a low-temperature combustion is conducted, and the hydrocarbons do not grow into soot.

The low-temperature combustion has a feature in that the amount of NOx that is generated can be decreased while suppressing the production of smoke irrespective of the air-fuel ratio. That is, when the air-fuel ratio is enriched, the fuel becomes excessive. However, as the combustion temperature has been suppressed to be low, the excess fuel does not grow into soot and, hence, no smoke is produced. In this case, further, NOx is produced in a very small amount. On the other hand, when the average air-fuel ratio is lean or even when the air-fuel ratio is the stoichiometric air-fuel ratio, soot is produced in small amounts as the combustion temperature becomes high. When the combustion temperature is low, however, the temperature is suppressed to be low and, hence, no smoke at all is produced while NOx is produced in very small amounts.

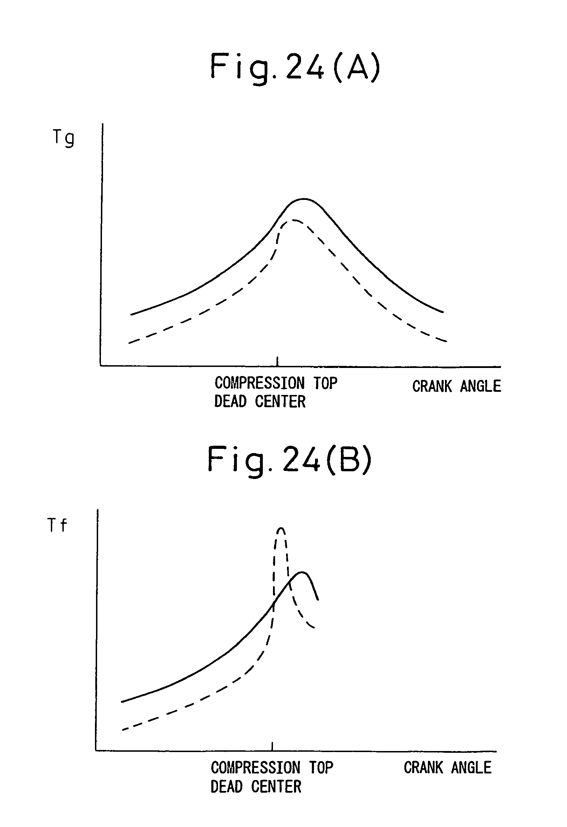

When the low-temperature combustion is conducted, on the other hand, the temperature of the fuel and of the surrounding gas decreases but the temperature of the exhaust gas increases. This will be described with reference to Figs. 24(A) and 24(B).

A solid line in Fig. 24(A) represents a relationship between the average gas temperature Tg in the combustion chamber 5 and the crank angle of when the low-temperature combustion is conducted, and a broken line in Fig. 24(A) represents a relationship between the average gas temperature Tg in the combustion chamber 5 and the crank angle of when the normal combustion is conducted. Further, a solid line in Fig. 24(B) represents a relationship between the temperature Tf of the fuel and of the surrounding gas and the crank angle of when the low-temperature combustion is conducted, and a broken line in Fig. 24(B) represents a relationship between the temperature Tf of the fuel and of the surrounding gas and the crank angle of when the normal combustion is conducted.

When low-temperature combustion is being conducted, the EGR gas is produced in an amount greater than that of when the normal combustion is conducted. As shown in Fig. 24(A), therefore, the average gas temperature Tg during the low-temperature combustion represented by the solid line becomes higher than the average gas temperature Tg during the normal combustion represented by the broken line before the compression top dead center, i.e., during the compression stroke. Here, in this case as shown in Fig. 24(B), the gas temperature Tf of the fuel and of the surrounding gas becomes nearly the same as the average gas temperature Tg.

Next, the combustion starts near the compression top dead center. When the low-temperature combustion is being conducted in this case, the temperature Tf of the fuel and of the surrounding gas does not become so high due to the endothermic action of the EGR gas as represented by the solid line in Fig. 24(B). When normal combustion is being conducted, on the other hand, a large amount of oxygen is present surrounding the fuel and, hence, the temperature Tf of the fuel and of the surrounding gas becomes very high as represented by the broken line in Fig. 24(B). Thus, when normal combustion is conducted, the temperature Tf of the fuel and of the surrounding gas becomes considerably higher than that of when the low-temperature combustion is conducted. However, the temperature of the gas occupying a majority of other portions becomes lower when the normal combustion is conducted than when the low-temperature combustion is conducted. As shown in Fig. 24(A), therefore, the average gas temperature Tg in the combustion chamber 5 near the compression top dead center becomes higher when the low-temperature combustion is conducted than when the normal combustion is conducted. As a result, as shown in Fig. 24(A), the temperature of the combusted gas in the combustion chamber 5 after the combustion is finished becomes higher when the low-temperature combustion is conducted than when the normal combustion is conducted. Thus, the exhaust gas temperature is elevated when the low-temperature combustion is conducted.

Here, as the torque TQ required of the engine increases, i.e., as the amount of fuel injection increases, the temperature of the fuel and of the surrounding gas increases at the time of combustion making it difficult to conduct low-temperature combustion. That is, the low-temperature combustion is conducted only during the intermediate- to small-load operations of the engine where heat is generated in relatively small amounts by the combustion.

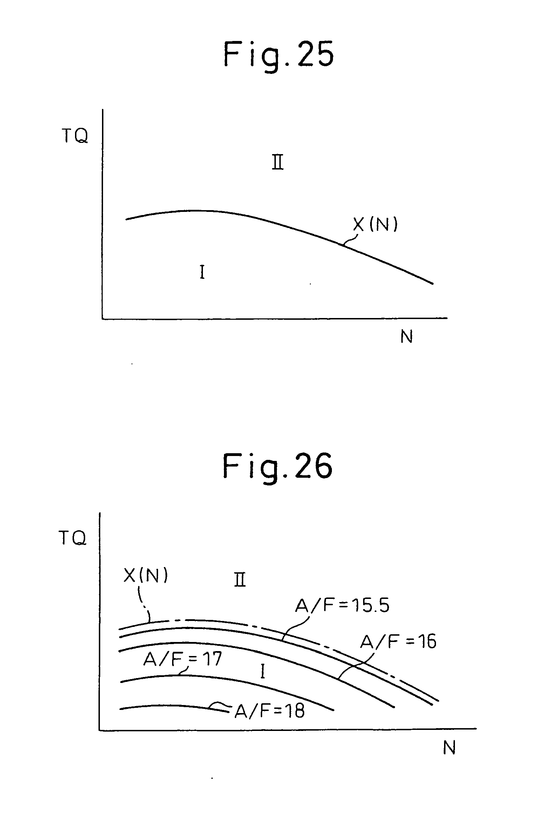

In Fig. 25, the region I stands for an operation region where a first combustion is conducted, i.e., the low-temperature combustion is conducted and where the amount of inert gas in the combustion chamber 5 is larger than the amount of inert gas with which the amount of soot that is produced becomes a peak, and the region II stands for an operation region where a second combustion is conducted, i.e., the normal combustion is conducted and where the amount of inert gas in the combustion chamber is smaller than the amount of inert gas with which the amount of soot that is produced becomes a peak.

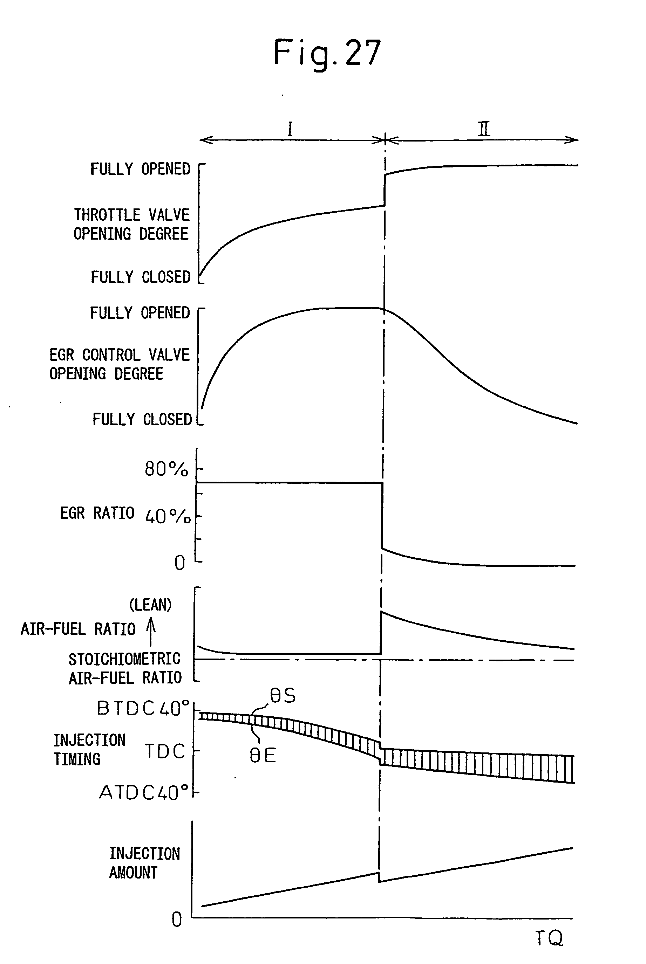

Fig. 26 illustrates target air-fuel ratios A/F when the low-temperature combustion is conducted in the operation region I, and Fig. 27 illustrates the opening degree of the throttle valve 17 that meets the required torque TQ, opening degree of the EGR control valve 23, EGR ratio, air-fuel ratio, injection start timing θS, injection completion timing θE and the amount of injection of when the low-temperature combustion is conducted in the operation region I. Fig. 27 also illustrates the opening degree of the throttle valve 17 and the like of when the normal combustion is conducted in the operation region II.

From Figs. 26 and 27, when the low-temperature combustion is conducted in the operation region I, it will be seen that the EGR ratio is set to be not lower than 55 percent, and the air-fuel ratio A/F is selected to be about 15.5 to about 18 to set a lean air-fuel ratio. When the low-temperature combustion is conducted in the operation region I as described above, almost no smoke is produced despite the air-fuel ratio being enriched.

When the low-temperature combustion is conducted as described above, the air-fuel ratio can be enriched without almost producing smoke. Therefore, the low-temperature combustion is conducted when the air-fuel ratio of the exhaust gas is to be enriched to recover the NOx purifying action of the exhaust gas purifying catalyst; i.e., the air-fuel ratio can be enriched while the low-temperature combustion is being conducted.

The temperature of the exhaust gas is elevated when the low-temperature combustion is conducted as described above. Therefore, the low-temperature combustion can be conducted when the temperature of the exhaust gas is to be elevated to ignite and burn the deposited particulates.

### EXAMPLES

### Example 1.

A surfactant solution was prepared in a 3 L beaker and, into the beaker was added dropwise and with stirring an aqueous solution obtained by dissolving 0.03 moles of lanthanum nitrate in 140 parts of distilled water to prepare a micro-emulsion solution. Next, a solution obtained by dissolving 0.12 moles of zirconium butoxide in 200 parts of cyclohexane was added dropwise to hydrolyze the zirconium butoxide. The mixture readily became a cloudy white color. Thereafter, to control the aggregation of precipitate, the pH was adjusted to be 8.5 with ammonia water. The mixture was stirred for one hour to mature the product. The mother liquor was separated by filtration, and the obtained precipitate was washed with ethanol three times, dried at 80°C overnight, and was fired in the atmosphere at 600°C for 2 hours to obtain a composite oxide containing lanthanum and zirconium (lanthanum zirconia). The composite oxide possessed a molar ratio La/Zr of 1/4.

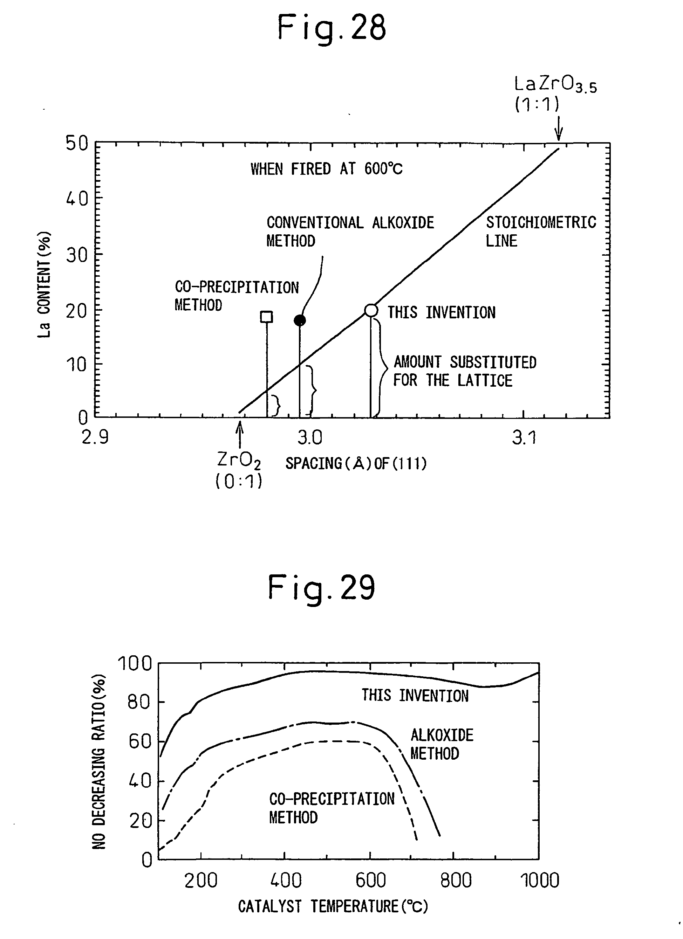

The thus obtained lanthanum zirconia was measured by the X-ray diffraction method to find the spacing of the (111) plane. The results are shown in Fig. 28. For comparison, Fig. 28 also shows the corresponding data of similar lanthanum zirconia produced by the co-precipitation method and the alkoxide method which are conventional methods.

In Fig. 28, a solid straight line connects the values of (111) spacings of theoretical crystal lattices in the compositions of ZrO₂ (La content is 0) and LaZrO_{3.5} (La content is 50%), and represents the calculated spacings of the compositions (La contents). Those obtained by the co-precipitation method and the conventional alkoxide method have lattice constants which are shorter than the theoretical value, indicating that most of La has not been substituted for the ZrO₂ crystal lattice. On the other hand, the lanthanum zirconia of the present invention has a spacing as calculated indicating that La³⁺ ions are nearly completely substituted for the ZrO₂ lattice.

### Example 2.

A monolithic substrate was coated with the lanthanum zirconia produced in Example 1 in a customary manner to carry 1% by weight of platinum as well as to carry cesium as an alkali metal, at the same mole number as that of lanthanum, to obtain the exhaust gas purifying catalyst of the present invention. For comparison, further, there were used lanthanum zirconias obtained by the co-precipitation method and the alkoxide method to carry platinum and cesium in the same manner.

These catalysts were studied for their NOx occlusion performance at high temperatures. The testing was conducted by reducing the catalyst at 600°C in a reducing atmosphere, in a balanced stream of 714 ppm of NO + 3% of O₂/N₂ while lowering the temperature from 750°C → 100°C at a rate of 20°C/minute to measure the ratio of decreasing NOx. The results were as shown in Fig. 29.

In the conventional catalysts as shown in Fig. 29, the NOx holding capability sharply decreases as the temperature exceeds 700°C. On the other hand, it is obvious that the catalyst of the present invention holds NOx even at a temperature of as high as 1,000°C.

## Claims

1. An exhaust gas purifying catalyst carrying an alkali metal and a noble metal on a crystalline zirconium composite oxide having a ZrO₂ lattice, wherein the zirconium composite oxide is the one in which zirconium is partly substituted with at least one kind of element seLected from trivalent rare earth metals, wherein said element is nearly completely substituted for the ZrO₂ lattice so that the elongation of the ZrO₂ lattice due to the substitution with the element assumes a nearly theoretical value.

2. An exhaust gas purifying catalyst according to claim 1, wherein at least one kind of element selected from the trivalent rare earth metals is present in an amount of 5 to 50 mole % based on the whole mole number of all the metal elements in the zirconium composite oxide.

3. An exhaust gas purifying catalyst according to claim 1, wherein zirconium is partly substituted with lanthanum.

4. An exhaust gas purifying catalyst according to claim 1, wherein the alkali metal carried by the zirconium composite oxide is cesium.

5. An exhaust gas purifying catalyst according to claim 1, wherein the noble metal carried by the zirconium composite oxide is platinum.

6. A method of producing an exhaust gas purifying catalyst carrying an alkali metal and a noble metal on a crystalline zirconium composite oxide, wherein an organic phase in which is dissolved an organic compound that forms a hydroxide of zirconium upon the hydrolysis is brought into contact with an aqueous phase which contains, as ions, a second element selected from trivalent rare earth metals in order to take the second element into a product in a step of forming a hydroxide of zirconium by the hydrolysis of a zirconium organocompound on the interface thereof, the obtained composite hydroxide is fired to obtain a composite oxide of zirconium and the second element, and an alkali metal and a noble metal are carried thereon.

7. A method of producing an exhaust gas purifying catalyst according to claim 6, wherein the organocompound that forms the hydroxide of zirconium upon the hydrolysis is one selected from zirconium alkoxide and an acetylacetone zirconium complex.

8. A method of producing an exhaust gas purifying catalyst according to claim 6, wherein the organocompound that forms the hydroxide of zirconium upon hydrolysis is zirconium butoxide.

9. A method of producing an exhaust gas purifying catalyst according to claim 6, wherein the second element is lanthanum.

## Patentansprüche

1. Katalysator für die Abgasreinigung, der ein Alkalimetall und ein Edelmetall auf einem kristallinen Zirconiumverbundoxid trägt, das ein ZrO₂-Gitter hat, wobei das Zirconiumverbundoxid das eine ist, in welchem Zirconium teilweise mit wenigstens einer Art von Element ausgewählt aus dreiwertigen Seltenerdmetallen substituiert ist, wobei das Element nahezu vollständig für das ZrO₂-Gitter substituiert wird, so dass die Dehnung des ZrO₂-Gitters aufgrund der Substitution mit dem Element einen nahezu theoretischen Wert annimmt.

2. Katalysator für die Abgasreinigung nach Anspruch 1, wobei wenigstens eine Art von Element ausgewählt aus den dreiwertigen Seltenerdmetallen in einer Menge von 5 bis 50 Mol-% auf der Grundlage der gesamten Molzahl all der Metallelemente in dem Zirconiumverbundoxid vorhanden ist.

3. Katalysator für die Abgasreinigung nach Anspruch 1, wobei Zirconium teilweise mit Lanthan substituiert ist.

4. Katalysator für die Abgasreinigung nach Anspruch 1, wobei das durch das Zirconiumverbundoxid getragene Alkalimetall Cäsium ist.

5. Katalysator für die Abgasreinigung nach Anspruch 1, wobei das durch das Zirconiumverbundoxid getragene Edelmetall Platin ist.

6. Verfahren für die Herstellung eines Katalysator für die Abgasreinigung, der ein Alkalimetall und ein Edelmetall auf einem kristallinen Zirconiumverbundoxid trägt, wobei eine organische Phase, in welcher eine organische Verbindung gelöst ist, die nach der Hydrolyse ein Hydroxid von Zirconium bildet, mit einer wässrigen Phase in Kontakt gebracht wird, welche, als Ionen, ein zweites Element ausgewählt aus dreiwertigen seltenen Erdmetallen enthält, um das zweite Element in einem Schritt der Ausbildung eines Hydroxids von Zirconium durch die Hydrolyse einer organischen Zirconiumverbindung an der Grenzfläche davon in ein Produkt aufzunehmen, wobei das erhaltene Verbundoxid gebrannt wird, um ein Verbundoxid des Zirconiums und des zweiten Elements zu erhalten, und ein Alkalimetall und ein Edelmetall darauf getragen werden.

7. Verfahren für die Herstellung eines Katalysators für die Abgasreinigung nach Anspruch 6, wobei die organische Verbindung, die das Hydroxid des Zirconiums nach der Hydrolyse bildet, eine ausgewählt aus Zirconiumalkoxid und einem Acetylaceton-Zirconium-Komplex ist.

8. Verfahren für die Herstellung eines Katalysators für die Abgasreinigung nach Anspruch 6, wobei die organische Verbindung, die das Hydroxid von Zirconium nach der Hydrolyse bildet, Zirconiumbutoxid ist.

9. Verfahren für die Herstellung eines Katalysators für die Abgasreinigung nach Anspruch 6, wobei das zweite Element Lanthan ist.

## Revendications

1. Catalyseur de purification de gaz d'échappement portant un métal alcalin et un métal noble sur un oxyde composite de zirconium cristallin ayant un réseau ZrO₂, où l'oxyde composite de zirconium est celui dans lequel le zirconium est partiellement substitué par au moins un type d'élément choisi parmi les métaux des terres rares trivalents, où ledit élément est presque complètement substitué pour le réseau ZrO₂ de sorte que l'allongement du réseau ZrO₂ dû à la substitution par l'élément prenne une valeur presque théorique.

2. Catalyseur de purification de gaz d'échappement selon la revendication 1, dans lequel au moins un type d'élément choisi parmi les métaux de terres rares trivalents est présent en une quantité allant de 5 à 50 % en mole sur la base de la totalité de nombre de moles de tous les éléments métalliques dans l'oxyde composite de zirconium.

3. Catalyseur de purification de gaz d'échappement selon la revendication 1, dans lequel le zirconium est partiellement substitué par le lanthane.

4. Catalyseur de purification de gaz d'échappement selon la revendication 1, dans lequel le métal alcalin porté par l'oxyde composite de zirconium est le césium.

5. Catalyseur de purification de gaz d'échappement selon la revendication 1, dans lequel le métal noble porté par l'oxyde composite de zirconium est le platine.

6. Procédé de production d'un catalyseur de purification de gaz d'échappement portant un métal alcalin et un métal noble sur un oxyde composite de zirconium cristallin, où une phase organique dans laquelle est dissous un composé organique qui forme un hydroxyde de zirconium lors de l'hydrolyse est mise en contact avec une phase aqueuse qui contient, sous forme d'ions, un deuxième élément choisi parmi les métaux de terres rares trivalents afin d'entraîner le deuxième élément dans un produit dans une étape consistant à former un hydroxyde de zirconium par l'hydrolyse d'un composé organique de zirconium sur son interface, l'hydroxyde composite obtenu est cuit pour obtenir un oxyde composite de zirconium et du deuxième élément, et un métal alcalin et un métal noble sont portés dessus.

7. Procédé de production d'un catalyseur de purification de gaz d'échappement selon la revendication 6, dans lequel le composé organique qui forme l'hydroxyde de zirconium lors de l'hydrolyse est un élément choisi parmi un alcoxyde de zirconium et un complexe d'acétylacétone-zirconium.

8. Procédé de production d'un catalyseur de purification de gaz d'échappement selon la revendication 6, dans lequel le composé organique qui forme l'hydroxyde de zirconium lors de l'hydrolyse est le butoxyde de zirconium.

9. Procédé de production d'un catalyseur de purification de gaz d'échappement selon la revendication 6, dans lequel le deuxième élément est le lanthane.
